# EUROPEAN PATENT APPLICATION

(11) **EP 4 823 184 A1**
(43) Date of publication of application: **14.10.2026**
(21) Application number: 24899960.9
(22) Date of filing: 06.12.2024
(51) Int. Cl.: H04W 48/08

(54) **SIGNAL TRANSMISSION METHOD AND APPARATUS**

(30) Priority: 07.12.2023 CN 202311675525
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); YANG, Meiying, Beijing 100085 (CN); SU, Yuwan, Beijing 100085 (CN)
(74) Representative: Studio Torta S.p.A.
(86) International application number: PCT/CN2024/137403
(87) International publication number: WO 2025/119327

(57) **Abstract**

The present disclosure relates to the technical field of communications, and provides a signal transmission method and apparatus. The method of embodiments of the present disclosure comprises: transmitting an uplink signal, the uplink signal carrying at least one of discovery information and trigger information, wherein the discovery information is used for discovering a terminal, and the trigger information is used for at least one of the following: waking up a target cell; triggering the target cell to transmit and/or receive a first object, the first object comprising at least one of a first reference signal and a first channel; and triggering the target cell to switch to a target cell state.

## Description

### CROSS-REFERENCE TO RELATED APPLICATION

The present application is filed based on and claims the priority of Chinese Application No. 202311675525.0 filed on December 7, 2023 and entitled "Signal transmission method and apparatus", the disclosure of which are incorporated in their entireties by reference herein.

### TECHNICAL FIELD

The present disclosure relates to the field of communication technologies, and in particular, to a signal transmission method and apparatus.

### BACKGROUND

Network energy saving is very important for environmental sustainability, reducing environmental impact (greenhouse gas emissions) and lowering operational costs. In related art, a base station can adopt certain energy-saving measures, such as sleeping or stopping signal transmission and reception. However, when a terminal is unaware of when the base station enters an energy-saving state, the terminal operates under the default assumption that the base station is always available. Consequently, in case that the base station cannot be awakened or turned on, the terminal's service will be affected.

### SUMMARY

An object of the present disclosure is to provide an information processing method and apparatus, which can solve the problem of how a terminal wakes up or triggers a base station to provide services.

In order to achieve the above purpose, the present disclosure provides a signal transmission method, performed by a terminal, wherein the method includes:
transmitting an uplink signal; wherein the uplink signal carries at least one of discovery information or trigger information;
wherein the discovery information is used to discover the terminal; and the trigger information is used for at least one of the following:
waking up a target cell;
triggering a target cell to transmit and/or receive a first object; wherein the first object includes at least one of a first reference signal or a first channel; or
triggering a target cell to switch to a target cell state.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the discovery information includes at least one of amplitude, frequency, carrier, bandwidth, phase, power or energy of a signal used for signal detection.

In some embodiments, the trigger information includes at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

In some embodiments, at least one piece of indication information in the trigger information is indicated in an implicit manner.

In some embodiments, the trigger information includes N bits of information, wherein N is an integer greater than or equal to 0;
wherein the N bits of information of the trigger information are used to indicate M indication information in the trigger information; an i-th indication information in the M indication information corresponds to Ki bits in the N bits, and different indication information corresponds to different bits in the N bits, where M is an integer greater than or equal to 1, and M is less than or equal to N, Ki is less than or equal to N, and Ki is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

In some embodiments, the first indication information includes at least one of indication information of whether to wake up the target cell and indication information of the target cell to be woken up;
and/or, the first indication information includes A1 bits of information and a value and/or sequence corresponding to the A1 bits of information is used to indicate whether to wake up the target cell and/or indicate the target cell to be woken up, where A1 is an integer greater than or equal to 0.

In some embodiments, the second indication information includes at least one of indication information of whether to transmit and/or receive the first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell identify (ID), and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

In some embodiments, the uplink signal includes a first uplink signal, and the first uplink signal carries the discovery information and the trigger information;
or, the uplink signal includes a second uplink signal and a third uplink signal, the second uplink signal carries the discovery information, and the third uplink signal carries the trigger information;
or, the uplink signal includes a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal includes a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

In some embodiments, the method further includes:
obtaining resource related information of the uplink signal; wherein the resource related information is used to generate the uplink signal and/or to determine a transmitting resource location of the uplink signal;
wherein the resource related information is obtained based on at least one of resource information stored in the terminal, resource information configured by neighboring cell high layer signaling, resource information configured by core network signaling, resource information transmitted by broadcast signaling, or resource information defined by the protocol.

In some embodiments, the resource related information of the uplink signal includes at least one of the following:
generation related information of the uplink signal; or
resource location information of the uplink signal;
wherein the generation related information includes at least one of a transmission frequency, the number of frequency domain units, patterns occupied by the frequency domain units, a time domain reference point, the number of time domain units occupied, the number of segments of the uplink signal, the number of points of inverse fast Fourier transform (IFFT), a sequence length of the uplink signal, a sequence length of at least one indication information in the uplink signal, or the number of at least one indication information in the uplink signal;
wherein the resource location information includes at least one of time domain resource occasion information, frequency domain resource location information or spatial domain resource location information.

In some embodiments, the time domain resource occasion information includes at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

In some embodiments, the frequency domain resource information of the uplink signal includes at least one of the following: a subcarrier where the uplink signal is located; a bandwidth part BWP where the uplink signal is located, or a transmission pattern of the uplink signal in the frequency domain.

In some embodiments, the spatial resource location information of the uplink signal includes beam-related information of the uplink signal.

In some embodiments, the method further includes:
obtaining a response signal for the uplink signal;
wherein the response signal carries at least one of the following:
acknowledgment information of the first signal;
feedback information of the first signal;
a second reference signal and/or second channel;
cell information of a cell that transmits the response signal; or,
specific cell information.

In some embodiments, the method further includes:
at a first moment, transmitting and/or receiving a second object of the target cell;
wherein the first moment includes at least one of the following:
   a moment that is offset by a first duration from a transmission time of the uplink signal; or
   a moment that is offset by a second duration from a reception time of a response signal for the first signal;
   wherein the target cell includes at least one of the following:
      at least one cell indicated by the trigger information;
      at least one cell that transmits the response signal;
      at least one cell indicated by the response signal;
      a cell accessed by the terminal;
      wherein the second object includes at least one of the following:
         synchronization signal/physical broadcast channel signal block (SSB) or system information block (SIB1) transmitted by the target cell;
         at least one of a reference signal or a channel transmitted by the target cell;
         at least one of a first reference signal or a first channel indicated by the trigger information;
         at least one of a reference signal or a channel corresponding to a specific function indicated by the trigger information;
         at least one of a reference signal or a channel corresponding to terminal requirement information indicated by the trigger information;
         at least one of a reference signal and a channel corresponding to a target cell state indicated by the trigger information;
         at least one of a reference signal or a channel under default parameter configuration;
         at least one of a reference signal or a channel under parameter configuration carried by a broadcast channel or broadcast message of an access cell; or
         a second reference signal and/or a second channel indicated by the response signal.

One embodiment of the present disclosure further provides a signal transmission method, performed by a network side device, including:
receiving an uplink signal; wherein the uplink signal carries at least one of discovery information or trigger information;
wherein the discovery information is used to discover a terminal; and the trigger information is used for at least one of the following:
   waking up a target cell;
   triggering a target cell to transmit and/or receive a first object; wherein the first object includes at least one of a first reference signal or a first channel; or
   triggering a target cell to switch to a target cell state.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the trigger information includes at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

In some embodiments, the uplink signal includes a first uplink signal, and the first uplink signal carries the discovery information and the trigger information;
or, the uplink signal includes a second uplink signal and a third uplink signal, the second uplink signal carries the discovery information, and the third uplink signal carries the trigger information;
or, the uplink signal includes a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal includes a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

In some embodiments, the method further includes:
transmitting a response signal for the uplink signal;
wherein the response signal carries at least one of the following:
   acknowledgment information of the first signal;
   feedback information of the first signal;
   a second reference signal and/or second channel;
   cell information of a cell that transmits the response signal; or,
   specific cell information.

In some embodiments, the transmitting a response signal for the uplink signal, includes:
in case that signal information of the uplink signal meets a first condition, transmitting the response signal for the uplink signal;
wherein the signal information includes at least one of amplitude, frequency, carrier, bandwidth, phase, power and energy of the uplink signal.

In some embodiments, the method further includes:
in case that signal information of the uplink signal meets a first condition, performing at least one of the following:
discovering the terminal; waking up the target cell; triggering the target cell to transmit or receive the first object; triggering the target cell to switch to the target cell state;
wherein the signal information includes at least one of amplitude, frequency, carrier, bandwidth, phase, power and energy of the uplink signal.

In some embodiments, the method further includes:
at a second moment, transmitting and/or receiving a third object;
wherein the second moment includes at least one of the following:
   a moment that is offset by a third duration from a reception time of the uplink signal; or
   a moment that is offset by a fourth duration from a transmission time of a response signal to the uplink signal;
   wherein the third object includes at least one of the following:
      synchronization signal/physical broadcast channel signal block SSB or system information block SIB1 transmitted by a target cell indicated by the trigger information;
      at least one of a reference signal, a control channel, and a data channel transmitted by a target cell indicated by the trigger information;
      at least one of a first reference signal or a first channel indicated by the trigger information;
      at least one of a reference signal, a control channel, or a data channel corresponding to a specific function indicated by the trigger information;
      at least one of a reference signal, a control channel, or a data channel corresponding to terminal requirement information indicated by the trigger information;
      at least one of a reference signal, a control channel, and a data channel corresponding to a target cell state indicated by the trigger information;
      at least one of a reference signal, a control channel or a data channel under default parameter configuration;
      at least one of a reference signal, a control channel or a data channel under parameter configuration carried by a broadcast channel or broadcast message of an access cell;
      a second reference signal and/or a second channel indicated by the response signal.

In some embodiments, the trigger information includes N bits of information, wherein N is an integer greater than or equal to 0;
wherein the N bits of information of the trigger information are used to indicate M indication information in the trigger information; an i-th indication information in the M indication information corresponds to Ki bits in the N bits, and different indication information corresponds to different bits in the N bits, where M is an integer greater than or equal to 1, and M is less than or equal to N, Ki is less than or equal to N, and Ki is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

In some embodiments, the first indication information includes at least one of indication information of whether to wake up the target cell and indication information of the target cell to be woken up;
and/or, the first indication information includes A1 bits of information and a value and/or sequence corresponding to the A1 bits of information is used to indicate whether to wake up the target cell and/or indicate the target cell to be woken up, where A1 is an integer greater than or equal to 0.

In some embodiments, the second indication information includes at least one of indication information of whether to transmit and/or receive the first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell identify (ID), and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

One embodiment of the present disclosure further provides a signal transmission apparatus, including: a memory, a transceiver, and a processor;
wherein the memory is used to store a computer program; the transceiver is used to send and receive data under the control of the processor; the processor is used to read the computer program in the memory and perform the following operations:
transmitting an uplink signal; wherein the uplink signal carries at least one of discovery information or trigger information;
wherein the discovery information is used to discover a terminal; and the trigger information is used for at least one of the following:
   waking up a target cell;
   triggering a target cell to transmit and/or receive a first object; wherein the first object includes at least one of a first reference signal or a first channel; or
   triggering a target cell to switch to a target cell state.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the discovery information includes at least one of amplitude, frequency, carrier, bandwidth, phase, power or energy of a signal used for signal detection.

In some embodiments, the trigger information includes at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

In some embodiments, at least one piece of indication information in the trigger information is indicated in an implicit manner.

In some embodiments, the trigger information includes N bits of information, wherein N is an integer greater than or equal to 0;
wherein the N bits of information of the trigger information are used to indicate M indication information in the trigger information; an i-th indication information in the M indication information corresponds to Ki bits in the N bits, and different indication information corresponds to different bits in the N bits, where M is an integer greater than or equal to 1, and M is less than or equal to N, Ki is less than or equal to N, and Ki is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

In some embodiments, the first indication information includes at least one of indication information of whether to wake up the target cell and indication information of the target cell to be woken up;
and/or, the first indication information includes A1 bits of information and a value and/or sequence corresponding to the A1 bits of information is used to indicate whether to wake up the target cell and/or indicate the target cell to be woken up, where A1 is an integer greater than or equal to 0.

In some embodiments, the second indication information includes at least one of indication information of whether to transmit and/or receive the first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell identify (ID), and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

In some embodiments, the uplink signal includes a first uplink signal, and the first uplink signal carries the discovery information and the trigger information;
or, the uplink signal includes a second uplink signal and a third uplink signal, the second uplink signal carries the discovery information, and the third uplink signal carries the trigger information;
or, the uplink signal includes a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal includes a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

In some embodiments, the processor is further used to performs:
obtaining resource related information of the uplink signal; wherein the resource related information is used to generate the uplink signal and/or to determine a transmitting resource location of the uplink signal;
wherein the resource related information is obtained based on at least one of resource information stored in the terminal, resource information configured by neighboring cell high layer signaling, resource information configured by core network signaling, resource information transmitted by broadcast signaling, or resource information defined by the protocol.

In some embodiments, the resource related information of the uplink signal includes at least one of the following:
generation related information of the uplink signal; or
resource location information of the uplink signal;
wherein the generation related information includes at least one of a transmission frequency, the number of frequency domain units, patterns occupied by the frequency domain units, a time domain reference point, the number of time domain units occupied, the number of segments of the uplink signal, the number of points of inverse fast Fourier transform (IFFT), a sequence length of the uplink signal, a sequence length of at least one indication information in the uplink signal, or the number of at least one indication information in the uplink signal;
wherein the resource location information includes at least one of time domain resource occasion information, frequency domain resource location information or spatial domain resource location information.

In some embodiments, the time domain resource occasion information includes at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

In some embodiments, the frequency domain resource information of the uplink signal includes at least one of the following: a subcarrier where the uplink signal is located; a bandwidth part BWP where the uplink signal is located, or a transmission pattern of the uplink signal in the frequency domain.

In some embodiments, the spatial resource location information of the uplink signal includes beam-related information of the uplink signal.

In some embodiments, the processor is further used to performs:
obtaining a response signal for the uplink signal;
wherein the response signal carries at least one of the following:
acknowledgment information of the first signal;
feedback information of the first signal;
a second reference signal and/or second channel;
cell information of a cell that transmits the response signal; or,
specific cell information.

In some embodiments, the processor is further used to performs:
at a first moment, transmitting and/or receiving a second object of the target cell;
wherein the first moment includes at least one of the following:
   a moment that is offset by a first duration from a transmission time of the uplink signal; or
   a moment that is offset by a second duration from a reception time of a response signal for the first signal;
   wherein the target cell includes at least one of the following:
      at least one cell indicated by the trigger information;
      at least one cell that transmits the response signal;
      at least one cell indicated by the response signal;
      a cell accessed by the terminal;
      wherein the second object includes at least one of the following:
         synchronization signal/physical broadcast channel signal block (SSB) or system information block (SIB1) transmitted by the target cell;
         at least one of a reference signal or a channel transmitted by the target cell;
         at least one of a first reference signal or a first channel indicated by the trigger information;
         at least one of a reference signal or a channel corresponding to a specific function indicated by the trigger information;
         at least one of a reference signal or a channel corresponding to terminal requirement information indicated by the trigger information;
         at least one of a reference signal and a channel corresponding to a target cell state indicated by the trigger information;
         at least one of a reference signal or a channel under default parameter configuration;
         at least one of a reference signal or a channel under parameter configuration carried by a broadcast channel or broadcast message of an access cell; or
         a second reference signal and/or a second channel indicated by the response signal.

One embodiment of the present disclosure further provides a signal transmission apparatus, including: a memory, a transceiver, and a processor;
wherein the memory is used to store a computer program; the transceiver is used to send and receive data under the control of the processor; the processor is used to read the computer program in the memory and perform the following operations:
receiving an uplink signal; wherein the uplink signal carries at least one of discovery information or trigger information;
wherein the discovery information is used to discover a terminal; and the trigger information is used for at least one of the following:
   waking up a target cell;
   triggering a target cell to transmit and/or receive a first object; wherein the first object includes at least one of a first reference signal or a first channel; or
   triggering a target cell to switch to a target cell state.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the trigger information includes at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

In some embodiments, the uplink signal includes a first uplink signal, and the first uplink signal carries the discovery information and the trigger information;
or, the uplink signal includes a second uplink signal and a third uplink signal, the second uplink signal carries the discovery information, and the third uplink signal carries the trigger information;
or, the uplink signal includes a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal includes a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

In some embodiments, the processor is further used to perform:
transmitting a response signal for the uplink signal;
wherein the response signal carries at least one of the following:
   acknowledgment information of the first signal;
   feedback information of the first signal;
   a second reference signal and/or second channel;
   cell information of a cell that transmits the response signal; or,
   specific cell information.

In some embodiments, the processor is further used to perform:
in case that signal information of the uplink signal meets a first condition, transmitting the response signal for the uplink signal;
wherein the signal information includes at least one of amplitude, frequency, carrier, bandwidth, phase, power and energy of the uplink signal.

In some embodiments, the processor is further used to perform:
in case that signal information of the uplink signal meets a first condition, performing at least one of the following:
discovering the terminal; waking up the target cell; triggering the target cell to transmit or receive the first object; triggering the target cell to switch to the target cell state;
wherein the signal information includes at least one of amplitude, frequency, carrier, bandwidth, phase, power and energy of the uplink signal.

In some embodiments, the processor is further used to perform:
at a second moment, transmitting and/or receiving a third object;
wherein the second moment includes at least one of the following:
a moment that is offset by a third duration from a reception time of the uplink signal; or
a moment that is offset by a fourth duration from a transmission time of a response signal to the uplink signal;
wherein the third object includes at least one of the following:
   synchronization signal/physical broadcast channel signal block SSB or system information block SIB1 transmitted by a target cell indicated by the trigger information;
   at least one of a reference signal, a control channel, and a data channel transmitted by a target cell indicated by the trigger information;
   at least one of a first reference signal or a first channel indicated by the trigger information;
   at least one of a reference signal, a control channel, or a data channel corresponding to a specific function indicated by the trigger information;
   at least one of a reference signal, a control channel, or a data channel corresponding to terminal requirement information indicated by the trigger information;
   at least one of a reference signal, a control channel, and a data channel corresponding to a target cell state indicated by the trigger information;
   at least one of a reference signal, a control channel or a data channel under default parameter configuration;
   at least one of a reference signal, a control channel or a data channel under parameter configuration carried by a broadcast channel or broadcast message of an access cell;
   a second reference signal and/or a second channel indicated by the response signal.

In some embodiments, the trigger information includes N bits of information, wherein N is an integer greater than or equal to 0;
wherein the N bits of information of the trigger information are used to indicate M indication information in the trigger information; an i-th indication information in the M indication information corresponds to Ki bits in the N bits, and different indication information corresponds to different bits in the N bits, where M is an integer greater than or equal to 1, and M is less than or equal to N, Ki is less than or equal to N, and Ki is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

In some embodiments, the first indication information includes at least one of indication information of whether to wake up the target cell and indication information of the target cell to be woken up;
and/or, the first indication information includes A1 bits of information and a value and/or sequence corresponding to the A1 bits of information is used to indicate whether to wake up the target cell and/or indicate the target cell to be woken up, where A1 is an integer greater than or equal to 0.

In some embodiments, the second indication information includes at least one of indication information of whether to transmit and/or receive the first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell identify (ID), and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

One embodiment of the present disclosure further provides a processor-readable storage medium, including: a computer program stored thereon; wherein the computer program is used to cause a processor to perform steps of the above signal transmission method.

The above technical solution of the present disclosure at least provides the following beneficial effects.

In the embodiment of the present disclosure, an uplink signal is transmitted, and the uplink signal carries at least one of discovery information or trigger information; the discovery information is used to discover the terminal; and the trigger information is used for at least one of the following: waking up a target cell, triggering a target cell to transmit and/or receive a first object which includes at least one of a first reference signal and a first channel, or triggering a target cell to switch to a target cell state. In this way, through the above discovery information and/or trigger information, the purpose of waking up the dormant cell or triggering the dormant cell to wake up for providing services can be achieved.

### BRIEF DESCRIPTION OF THE DRAWINGS

FIG. 1 is a schematic diagram of a network system applicable to an embodiment of the present disclosure;
FIG. 2 is a first flow chart of a signal transmission method according to an embodiment of the present disclosure;
FIG. 3 is first schematic diagram of a signal transmitter according to an embodiment of the present disclosure;
FIG. 4 is second schematic diagram of a signal transmitter according to an embodiment of the present disclosure;
FIG. 5 is a first schematic diagram of signal transmission according to an embodiment of the present disclosure;
FIG. 6 is a second schematic diagram of signal transmission according to an embodiment of the present disclosure;
FIG. 7 is a third schematic diagram of signal transmission according to an embodiment of the present disclosure;
FIG. 8 is a fourth schematic diagram of signal transmission according to an embodiment of the present disclosure;
FIG. 9 is a fifth schematic diagram of signal transmission according to an embodiment of the present disclosure;
FIG. 10 is a first schematic diagram of modulating a signal according to an embodiment of the present disclosure;
FIG. 11 is a second schematic diagram of modulating a signal according to an embodiment of the present disclosure;
FIG. 12 is a third schematic diagram of modulating a signal according to an embodiment of the present disclosure;
FIG. 13 is a fourth schematic diagram of modulating a signal according to an embodiment of the present disclosure;
FIG. 14 is a first schematic diagram showing interactions according to an embodiment of the present disclosure;
FIG. 15 is a second schematic diagram showing interactions according to an embodiment of the present disclosure;
FIG. 16 is a third schematic diagram showing interactions according to an embodiment of the present disclosure;
FIG. 17 is a fourth schematic diagram showing interactions according to an embodiment of the present disclosure;
FIG. 18 is a second flow chart of a signal transmission method according to an embodiment of the present disclosure;
FIG. 19 is a first schematic diagram of a signal transmission apparatus according to an embodiment of the present disclosure;
FIG. 20 is a second schematic diagram of a signal transmission apparatus according to an embodiment of the present disclosure;
FIG. 21 is a first schematic diagram showing modules of a signal transmission apparatus according to an embodiment of the present disclosure; and
FIG. 22 is a second schematic diagram showing modules of a signal transmission apparatus according to an embodiment of the present disclosure.

### DETAILED DESCRIPTION

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship. In the embodiment of the present application, the term "plurality" refers to two or more than two, and other quantifiers are similar.

In the embodiments of the present disclosure, terms such as "exemplary" or "for example" are used to illustrate an example, provide an instance, or give an explanation. Any embodiment or design solution described as "exemplary" or "for example" shall not be interpreted as being superior to or more advantageous than other embodiments or design solutions. Rather, the use of terms such as "exemplary" or "for example" is intended to present the related concepts in a concrete manner.

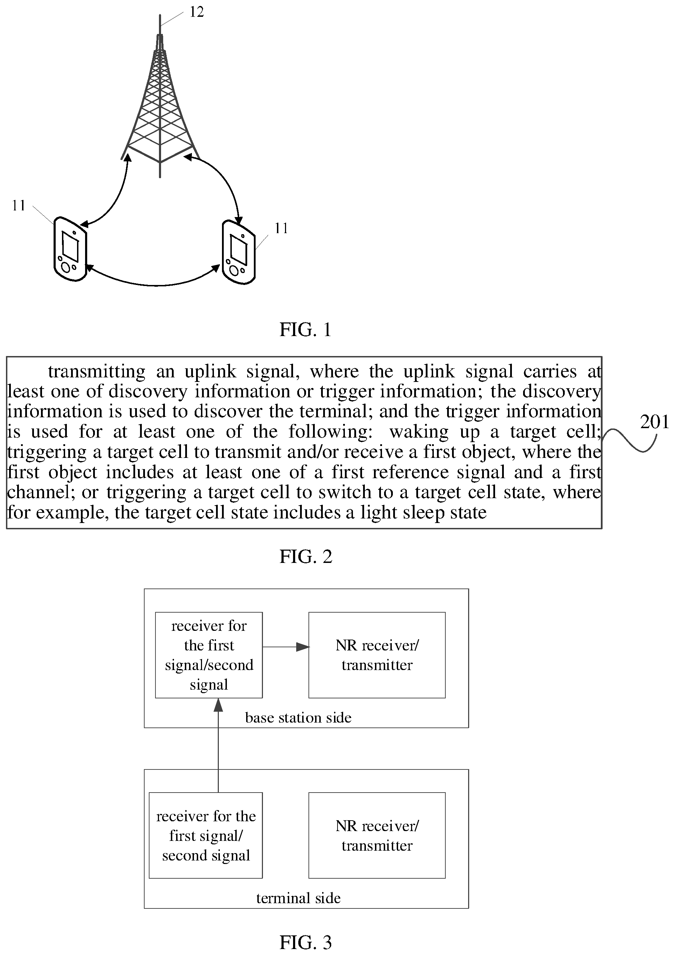

FIG. 1 shows a block diagram of a wireless communication system applicable to an embodiment of the present disclosure. The wireless communication system includes a terminal device 11 and a network side device (or network device) 12. The terminal device 11 may also be referred to as a terminal or a user equipment (UE). It is to be noted that the specific type of the terminal 11 is not limited in the embodiment of the present disclosure. The network side device 12 may be a base station or a core network. It is to be noted that in the embodiment of the present disclosure, the base station in the NR system is only taken as an example, but the specific type of the base station is not limited.

As shown in FIG. 2, one embodiment of the present disclosure provides a signal transmission method, performed by a terminal. The method includes:
Step 201: transmitting an uplink signal, where the uplink signal carries at least one of discovery information or trigger information.

The discovery information is used to discover the terminal; and the trigger information is used for at least one of the following:
waking up a target cell;
triggering a target cell to transmit and/or receive a first object, where the first object includes at least one of a first reference signal and a first channel; or
triggering a target cell to switch to a target cell state, where for example, the target cell state includes a light sleep state.

In some embodiments, the target cell includes at least one of a dormant cell, a closed cell, a sleeping cell, and an energy-saving cell. The target cell may be a primary serving cell or a secondary cell, and the target cell has a cell identity (ID).

In some embodiments, the above first reference signal includes at least one of the following: primary synchronization signal (PSS), secondary synchronization signal (SSS), synchronization signal/physical broadcast channel signal block (Synchronization Signal Block, SSB), CSI reference signal for tracking (TRS), positioning reference signal (PRS), phase-tracking reference signal (PT-RS), random access preamble, sounding reference signal (SRS), demodulation reference signal (DMRS), or CSI reference signal (CSI-RS).

In some embodiments, the first channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (PUSCH).

The first object is defined by the protocol or pre-configured by high layer signaling.

In the embodiment of the present disclosure, an uplink signal is transmitted; where the uplink signal carries at least one of discovery information or trigger information, the discovery information is used to discover the terminal, and the trigger information is used for at least one of the following: waking up a target cell, triggering a target cell to transmit and/or receive a first object which includes at least one of a first reference signal and a first channel, or triggering a target cell to switch to a target cell state. In this way, through the above discovery information and/or trigger information, the purpose of waking up a dormant cell or triggering a dormant cell to wake up and provide services can be achieved.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the above terminal includes a terminal to be served, which may be a dedicated terminal that only includes transmitting/receiving OOK/ASK/FSK/PSK signals based on orthogonal frequency division multiplexing (OFDM), or a terminal that includes both transmitting/receiving OFDM-based OOK/ASK/FSK/PSK signals and transmitting/receiving NR signals. Here, an OOK/ASK/FSK/PSK uplink signal transmitted by the terminal may be based on a multi-carrier waveform, such as cyclic prefix OFDM (CP-OFDM), or may be based on a single-carrier waveform, such as discrete Fourier Transform-Spread OFDM (DFT-S-OFDM).

The above OOK/ASK/FSK/PSK signal is a low-power signal different from the OFDM signal, and the processing method of the low-power signal is different from the processing method of the OFDM signal in the related technology; a dormant cell or a cell in an energy-saving state can process the low-power signal. In this way, the low-power signal enables the terminal to communicate with the dormant cell or the cell in an energy-saving state without synchronization, thereby waking up the dormant cell or triggering the dormant cell to wake up for providing services.

In some embodiments, the modulation signal is a signal based on orthogonal frequency division multiplexing (OFDM).

In case that the modulation signal is an OFDM-based OOK/ASK/FSK/PSK signal, the architecture of the new radio (NR) transceiver in the related art can be used, to further avoid adding new transceivers, thereby simplifying complexity of the transceiver. The detection of OOK/ASK/FSK/PSK modulated signals can be performed via envelope, filtering, or phase detection without requiring an Inverse Fast Fourier Transform (IFFT) operation. This significantly reduces power consumption of a receiving end, thereby achieving an energy-saving effect.

In some embodiments, the uplink signal includes an OFDM-based reference signal or channel.

The OFDM-based reference signal or channel is an OFDM-based reference signal or channel in NR. For example, the reference signal includes at least one of the following: primary synchronization signal (PSS), secondary synchronization signal (SSS), synchronization signal/physical broadcast channel signal block (Synchronization Signal Block, SSB), CSI reference signal for tracking (TRS), positioning reference signal (PRS), phase-tracking reference signal (PT-RS), random access preamble, sounding reference signal (SRS), demodulation reference signal (DMRS), CSI reference signal (CSI-RS). The OFDM-based channel in NR includes at least one of PUCCH, PDCCH, PBCH, PRACH, PSSCH, PDSCH, PUSCH, etc.

In some embodiments, the discovery information includes at least one of amplitude, frequency, carrier, bandwidth, phase, power and energy of a signal used for signal detection.

The discovery information is used for cells or base stations (such as Pico) around the terminal to discover the terminal.

In some embodiments, the trigger information includes at least one of the following:
first indication information; where the first indication information is indication information for waking up the target cell;
second indication information; where the second indication information is indication information for triggering the target cell to receive and/or transmit a first object, and the first object includes at least one of a first reference signal or a first channel;
third indication information; where the third indication information is indication information for triggering the target cell to switch to the target cell state;
fourth indication information; where the fourth indication information is used to indicate identifier information of the target cell; for example, when the trigger information includes only the fourth indication information, according to protocol agreement or base station pre-configuration, the target cell indicated by the fourth indication information is determined to be a target cell that needs to be awakened, a cell that needs to transmit and/or receive the first object, and/or a cell that needs to be switched to the target cell state. After the network side device receives the fourth indication information, if an identifier of the cell matches an identifier indicated by the fourth indication information, the network side device enters an awake state, transmits and/or receives the first object, and/or switches to the target cell state;
fifth indication information; where the fifth indication information is used to trigger the target cell to turn on and/or turn off a specific function;
sixth indication information; where the sixth indication information is used to indicate a specific identifier of the terminal;
seventh indication information; where the seventh indication information is used to indicate demand information of the terminal.

In some embodiments, at least one indication information in the trigger information is indicated in an explicit or implicit manner.

As an implementation, an implicit indication manner may include: indicating at least one of the above indication information through a protocol agreement or a base station pre-configuration, or indicating at least one of the above indication information through a specific sequence of an uplink signal.

Exemplarily, the uplink signal includes a discovery signal carrying discovery information, and the discovery signal may carry at least one of the indication information, for example, the first indication information and/or the second indication information, according to protocol agreement or base station pre-configuration. For example, different sequences of the discovery signal may implicitly indicate different indication information, according to the protocol agreement or base station pre-configuration.

As an implementation, the above uplink signal includes a trigger signal carrying trigger information. The explicit indication manner may include indicating through an information field of the trigger signal. For example, the trigger signal may includes a dedicated information field for each piece of indication information. Alternatively, a single information field can be used to jointly indicate at least one of the above pieces of indication information. In addition to being an information field within the trigger signal, this field can also be a sequence of a specific length.

For example, the protocol agreement or the base station pre-configuration implicitly indicates at least one of the above indication information through discovery information, or implicitly indicates at least one of the above indication information through a specific sequence of trigger signals.
according to a protocol agreement or base station pre-configuration, at least one of the above pieces of indication information may be implicitly indicated via discovery information or via a specific sequence of the trigger signal.

In some embodiments, the trigger information includes N bits of information, where N is an integer greater than or equal to 0.

The N bits of information of the trigger information is used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information is used to indicate at least one indication information in the trigger information, where N1 is an integer greater than or equal to 1, and N1 is less than or equal to N.

For example, when M=N and Kᵢ=1, N indication information is indicated by N bits of information, and each indication information corresponds to one bit, that is, the above indication information is indicated by bit mapping, i.e., each indication information is indicated by one bit alone.

For another example, when M is different from N, N bits indicate M indication information, and an i-th indication information in the M indication information corresponds to Kᵢ bits in the N bits, where 1≤i≤M, and K₁+K₂+......+≤N. In case that M is 3 and N is 8, the first indication information corresponds to the first bit and the second bit, the second indication information corresponds to the third bit and the fourth bit, and the third indication information corresponds to the fifth bit and the sixth bit. For another example, the first indication information corresponds to the first bit, the second indication information corresponds to the second bit and the third bit, and the third indication information corresponds to the fourth bit to the eighth bit.

For another example, the protocol stipulates that when the terminal does not transmit a trigger signal, the trigger information is default, i.e., N=0.

In some embodiments, the N bits of information included in the trigger information includes an information function indication field and an indication information field. The information function indication field can indicate specific content of the indication information field through bit mapping or value or specific pattern.

For example, the information function indication field has 3 bits of information, which are corresponding to the first indication information, the second indication information and the third indication information respectively. Assuming that the second bit of information corresponds to "1", the subsequent indication information field is the second indication information.

For another example, the information function indication field has 2 bits of information, and its value "01" corresponds to the first indication information, and its value "10" corresponds to the second indication information, and its value "11" corresponds to the third indication information. Assuming that the value of the information function indication field is "10", the subsequent indication information field is the second indication information.

For another example, the information function indication field has M patterns of N-bit sequences, and different patterns correspond to different indication information. According to the bit sequence pattern of the information function indication field, it can be known which indication information the subsequent indication information field specifically indicates.

In some embodiments, the first indication information includes at least one of indication information of whether to wake up a target cell and indication information of a target cell to be woken up;
and/or, the first indication information includes A1 bits of information and a value and/or sequence corresponding to the A1 bits of information is used to indicate whether to wake up a target cell and/or indicate a target cell to be woken up, where A1 is an integer greater than or equal to 0.

In one embodiment of the present disclosure, the uplink signal may include first indication information corresponding to multiple target cells, and the first indication information corresponding to each target cell includes A1 bits of information. When A1 is equal to 1, a wake-up indication is given to at least one target cell or target cell group via bit mapping, that is, each bit corresponds to a cell or a cell group. For example, when its value is "1", the corresponding cell or cell group is woken up; when its value is "0", the corresponding cell or cell group is not woken up. The cell or cell group corresponding to the bit mapping is obtained by pre-configuration.

For example, A1 is an integer greater than 1, and the A1 bits of information corresponding to the first indication information is an A1 bit sequence of a specific pattern. The terminal transmits the A1 bit sequence at a pre-configured or protocol-agreed resource location. The specific pattern of the A1 bit sequence may be pre-stored or pre-configured. After the base station receives the A1 bit sequence of the specific pattern, if its specific pattern matches a pre-stored or pre-configured pattern sequence, the base station considers it an indication to wake up the cell; otherwise, the base station considers it an indication that the cell is not to be woken up.

For another example, when the A1 bits of information corresponding to the first indication information takes a first value, it indicates to wake up a cell; when the A1 bits of information corresponding to the first indication information takes the first value, it indicates that the cell is not woken up.

For another example, the wake-up indication for a target cell is performed by whether the first indication information is included. That is, transmitting the first indication information indicates waking up the target cell or cell group, where A1 is greater than or equal to 1; not transmitting the first indication information indicates that the target cell or cell group is not to be woken up, where A1 being equal to 0.

In some embodiments, the second indication information includes at least one of indication information of whether to transmit and/or receive a first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object. For example, each of the A3 bits corresponds to a different first object.

In one embodiment of the present disclosure, A3 corresponding to different pieces of indication information in the second indication information may be identical or different.

For example, when A2=5, a first bit of the five bits indicates a first reference signal, and a second bit of the five bits indicates a second reference signal. When a value corresponding to the first bit is 1, it indicates transmission and/or reception of the first reference signal. When the value corresponding to the first bit is 0, it indicates not transmission and/or reception of the first reference signal.

For another example, when A2=5, first to second bits of the five bits indicate a first reference signal, and third to fifth bits of the five bits indicate a second reference signal. The corresponding values or patterns of the first to second bits are used to indicate a corresponding parameter configuration of the first reference signal, for instance, "00" indicates performing transmission and/or reception according to the first parameter configuration of the first reference signal; "01" indicates performing transmission and/or reception according to the second parameter configuration of the first reference signal, etc. The corresponding values or patterns of the third to fifth bits are used to indicate the corresponding parameter configuration of the second reference signal, for instance, "001" indicates performing transmission and/or reception according to the first parameter configuration of the second reference signal, "010" indicates performing transmission and/or reception according to the second parameter configuration of the second reference signal, etc.

For another example, different sequences or different values corresponding to A2 bits are used to indicate different first objects. For example, when A2 bits take a value of 1 or sequence 1, they are used to indicate transmitting and/or receiving the first reference signal and the second reference signal; and when A2 bits take a value of 2 or sequence 2, they are used to indicate transmitting and/or receiving a third reference signal and a fourth reference signal.

For another example, whether to transmit and/or receive the first object is indicated by whether the second indication information is included, that is, transmitting the second indication information indicates transmitting and/or receiving the first object, where A2 is greater than or equal to 1; not transmitting the second indication information indicates not transmitting and/or not receiving the first object, where A2 is equal to 0.

In some embodiments, the third indication information includes at least one of indication information indicating whether the target cell is switched between at least one cell state, and indication information indicating for switching to or maintaining a target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state. For example, each of the A5 bits corresponds to a different target cell state.

In the embodiment of the present disclosure, A5 corresponding to different pieces of indication information in the third indication information may be identical or different.

For example, when A4=5, a first bit of the 5 bits indicates a first energy-saving state, and a second bit of the 5 bits indicates a second energy-saving state. When the value corresponding to the first bit is 1, it indicates switching to the first energy-saving state. When the value corresponding to the first bit is 0, it indicates not switching to the first energy-saving state. When the value corresponding to the second bit is 1, it indicates switching to the second energy-saving state. When the value corresponding to the second bit is 0, it indicates not switching to the second energy-saving state.

For another example, different sequences or different values corresponding to A4 bits are used to indicate different target cell states. For example, when A4 bits takes a value 1 or sequence 1, they are used to indicate the first target cell state, and when A4 bits takes a value 2 or sequence 2, they are used to indicate the second target cell state.

For another example, whether to switch between at least one state is indicated by whether the third indication information is included, that is: transmitting the third indication information indicates switching between at least one state, where A4 is greater than or equal to 1; not transmitting the third indication information indicates switching between at least one state, where A4 is equal to 0.

In some embodiments, the third indication information includes a first information field and a second information field; the first information field is used to indicate a target cell state, and the second information field is used to indicate a reference signal and/or channel corresponding to the target cell state.

For example, the first information field has 3 bits of information, which are corresponding to a cell state 1, a cell state 2 and a cell state 3 respectively. Assuming that the second bit of information is 1, the second information field is used to indicate a reference signal and/or channel corresponding to the cell state 2.

For another example, the first information field has 2 bits of information, where a value of "01" corresponds to a cell state 1, "10" corresponds to a cell state 2, and "11" corresponds to a cell state 3. Assuming the first information field takes the value "10", the second information field is used to indicate a reference signal and/or channel corresponding to the cell state 2.

For another example, the first information field has M patterns of N-bit sequences, and different patterns correspond to different cell states. According to the bit sequence pattern of the first information field, the cell state corresponding to the subsequent second information field can be known.

In one embodiment of the present disclosure, specific reference signals and/or channels in different cell states can be configured through at least one of high-layer signaling, core network signaling, terminal pre-storage, neighbor cell signaling notification, etc.

In some embodiments, the fourth indication information includes at least one of an index of a cell in a frequency list, an index in a cell list, a cell identifier, a cell ID, and a bit map of at least one cell.

For example, modulation patterns of different OOK/ASK/FSK/PSK modulation signals correspond to cell IDs or index values of a cell list for different cells or cell groups.

For another example, the fourth indication information is used in conjunction with other indication information. For example, there are N bits of information in the trigger information, which can be divided into M information groups, each information group corresponds to one target cell or one target cell group, and each information group includes Ki bits of information that can correspond to at least one indication information. For example, Ki bits can be used to indicate the second indication information and the third indication information, and Ki bits can also be used to indicate the first reference signal and the first channel; such indication can be performed separately or jointly.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function. For example, each of the A7 bits corresponds to a different specific function.

The above specific function includes at least one of the following: access function, measurement function, synchronization function, positioning function, energy-saving function, specific service transmission function such as transmission and/or reception of a specific reference signal (set)/transmission channel (set) under at least one specific parameter configuration.

In the embodiment of the present disclosure, A7 corresponding to different pieces of indication information in the fifth indication information may be identical or different.

For example, when A6=5, a first bit of the five bits indicates a first specific function, and a second bit of the five bits indicates a second specific function. When a value corresponding to the first bit is 1, it means turning on the first specific function. When the value corresponding to the first bit is 0, it means turning off the first specific function. When the value corresponding to the second bit is 1, it means turning on the second specific function. When the value corresponding to the second bit is 0, it means turning off the second specific function.

For another example, different sequences or different values corresponding to A6 bits are used to indicate different specific functions. For example, when A6 bits take a value 1 or sequence 1, they are used to indicate a first specific function, and when A6 bits take a value 2 or sequence 2, they are used to indicate a second specific function.

For another example, whether to turn on and/or turn off a specific function is indicated by whether the fifth indication information is included, that is, transmitting the fifth indication information indicates turning on the specific function, where A6 is greater than or equal to 1; not transmitting the fifth indication information indicates turning off the specific function, where A6 is equal to 0.

In some embodiments, the fifth indication information includes a third information field and a fourth information field. The third information field is used to indicate a specific function, and the fourth information field is used to indicate a reference signal and/or channel corresponding to the specific function. For example, the third information field has 3 bits of information, which are corresponding to a specific function 1, a specific function 2, and a specific function 3, respectively. Assuming that the second bit of information is 1, the fourth information field is used to indicate a reference signal and/or channel corresponding to the specific function 2.

For another example, the third information field has 2 bits of information, and its value "01" corresponds to corresponding to a specific function 1, and its value "10" corresponds to a specific function 2, and its value "11" corresponds to a specific function 3. Assuming that the value of the third information field is "10", the fourth information field is used to indicate a reference signal and/or channel corresponding to the specific function 2.

For another example, the third information field has M patterns of N-bit sequences, and different patterns correspond to different specific functions. According to the bit sequence pattern of the third information field, the specific function corresponding to the subsequent fourth information field can be known.

In some embodiments, the sixth indication information includes at least one of a specific type of the terminal and terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information. For example, each of the A9 bits corresponds to a different terminal's specific type or terminal identity.

In some embodiments, the terminal identity information includes at least one of a terminal type identifier, a terminal version identifier, or a terminal identity for a supporting specific service, such as a terminal identity for supporting latency-sensitive services (such as XR services), or a terminal identity for dormant base station dedicated services.

In the embodiment of the present disclosure, A7 corresponding to different pieces of indication information in the sixth indication information may be identical or different.

For example, when A8=4, a first bit of the four bits indicates a first specific type, a second bit of the four bits indicates a second specific type, and a third bit of the four bits indicates a first terminal identity.

For another example, different sequences or different values corresponding to A8 bits are used to indicate different specific types or terminal identitys. For example, when A8 bits take a value of 1 or sequence 1, they are used to indicate a first specific type or a first terminal identity, and when A8 bits take a value of 2 or sequence 2, they are used to indicate a second specific type or a second terminal identity.

In some embodiments, the sixth indication information includes a fifth information field and a sixth information field. The fifth information field is used to indicate a specific type of the terminal and/or a terminal identity, and the sixth information field is used to indicate a reference signal and/or channel corresponding to the specific type and/or terminal identity.

For example, the fifth information field has 3 bits of information, which are corresponding to a specific type 1 and/or terminal identity 1, a specific type 2 and/or terminal identity 2, a specific type 3 and/or terminal identity 3, respectively. Assuming that the second bit of information is 1, the sixth information field is used to indicate a reference signal and/or channel corresponding to the specific type 2 and/or terminal identity 2.

For another example, the fifth information field has 2 bits of information, and its value "01: corresponds to a specific type 1 and/or terminal identity 1, and its value "10" corresponds to a specific type 2 and/or terminal identity 2, and its value "11" corresponds to a specific type 3 and/or terminal identity 3. Assuming that the value of the fifth information field is "10", the sixth information field is used to indicate a reference signal and/or channel corresponding to the specific type 2 and/or terminal identity 2.

For another example, the fifth information field has M patterns of N-bit sequences, and different patterns correspond to different specific types and/or terminal identitys. According to the bit sequence pattern of the fifth information field, the specific type and/or terminal identity corresponding to the subsequent sixth information field can be known.

In some embodiments, the seventh indication information includes at least one of indication information of a terminal service requirement or indication information of a terminal service type;

and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

In some embodiments, the indication information of the service requirement includes at least one of the following: indication information of access requirement, indication information of measurement requirement, indication information of synchronization requirement, indication information of positioning requirement, indication information of energy saving requirement, and indication information of specific service transmission requirement.

The indication information of the terminal service type includes at least one of the following: indication information of an XR service, indication information of an eMBB service, indication information of an URLLC service, indication information of an mMTC service, or indication information of an AIoT service.

In one embodiment of the present disclosure, A11 corresponding to different pieces of indication information in the seventh indication information may be identical or different.

For example, when A10=5, a first bit of the five bits indicates an access requirement, a second bit of the five bits indicates a positioning requirement, a third bit of the five bits indicates a URLLC service, and a fourth bit of the five bits indicates an mMTC service.

For another example, different sequences or different values corresponding to the A10 bits are used to indicate different service requirements or service types. For example, when the A10 bits take a value of 1 or a sequence of 1, they are used to indicate a first service requirement or a first service type; and when the A10 bits take a value of 2 or a sequence of 2, they are used to indicate a second service requirement or a second service type.

In some embodiments, the seventh indication information includes a seventh information field and an eighth information field. The seventh information field is used to indicate a service requirement and/or terminal service type, and the eighth information field is used to indicate a reference signal and/or channel corresponding to the service requirement and/or service type. For example, the seventh information field has 3 bits of information, which are corresponding to a service requirement 1 and/or service type 1, a service requirement 2 and/or service type 2, a service requirement 3 and/or service type 3, respectively. Assuming that the second bit of information is 1, the eighth information field is used to indicate a reference signal and/or channel corresponding to the service requirement 2 and/or service type 2.

For another example, the seventh information field has 2 bits of information, its value "01" corresponds to a service requirement 1 and/or service type 1, its value "10" corresponds to a service requirement 2 and/or service type 2, and its value "11" corresponds to a service requirement 3 and/or service type 3. Assuming that the value of the seventh information field is "10", the eighth information field is used to indicate a reference signal and/or channel corresponding to the service requirement 2 and/or service type 2.

For another example, the seventh information field has M patterns of N bit sequences, and different patterns correspond to different service requirements and/or service types. According to the bit sequence pattern of the seventh information field, the service requirements and/or service types corresponding to the subsequent eighth information field can be known.

In the embodiment of the present disclosure, the discovery information and the bearer information may be carried by the same signal or by different signals:

As an optional implementation, the uplink signal includes a first uplink signal, and the first uplink signal carries the discovery information and trigger information.

In this implementation, the first uplink signal is a modulation signal based on OOK/ASK/FSK/PSK. For example, the first uplink information is used to discover the terminal and wake up the target cell.

Alternatively, in some embodiments, the uplink signal includes a second uplink signal and a third uplink signal, the second uplink signal carries the discovery information, and the third uplink signal carries the trigger information.

In this implementation, the second uplink signal is a modulation signal based on OOK/ASK/FSK/PSK; and the third uplink signal is a modulation signal based on OOK/ASK/FSK/PSK, or an OFDM-based reference signal. For example, the second uplink signal is used to discover the terminal, and the third uplink signal is used to trigger the target cell to transmit and/or receive the first object.

Alternatively, as a third implementation, the uplink signal includes a fourth uplink signal and a fifth uplink signal; the fourth uplink signal is used to carry the discovery information and first trigger information in the trigger information; and the fifth uplink signal is used to carry second trigger information in the trigger information. At least part of the first trigger information is the same as the second trigger information, or the second trigger information is remaining trigger information in the trigger information except the first trigger information in the trigger information.

In this implementation, the first trigger information and the second trigger information are complementary trigger information or at least partially overlapping trigger information. For example, the fourth uplink signal is used to discover the terminal and trigger the target cell to transmit and/or receive the first object, and the fifth uplink signal is used to wake up the target cell or trigger the target cell to switch to the target cell state. The fourth uplink signal is a modulation signal based on OOK/ASK/FSK/PSK; and the fifth uplink signal is a modulation signal based on OOK/ASK/FSK/PSK, or is an OFDM-based reference signal.

Alternatively, as a fourth implementation, the trigger signal includes a sixth uplink signal and a seventh uplink signal. The sixth uplink signal is used to carry first discovery information in the discovery information and third trigger information in the trigger information. The seventh uplink signal is used to carry second discovery information in the discovery information and fourth trigger information in the trigger information. The first discovery information is the same as or different from the second discovery information. The third trigger information is at least partially identical to the fourth trigger information, or, the fourth trigger information is trigger information in the trigger information except for the third trigger information in the trigger information.

In some embodiments, the first discovery information includes at least part information in the discovery information, and the second discovery information includes at least part information in the discovery information.

In this implementation, the third trigger information and the fourth trigger information are complementary trigger information or at least partially overlapping trigger information. For example, the fourth uplink signal is used to discover the terminal and trigger the target cell to transmit and/or receive the first object, and the fifth uplink signal is used to discover the terminal and wake up the target cell. The sixth uplink signal is a modulation signal based on OOK/ASK/FSK/PSK, and the seventh uplink signal is a modulation signal based on OOK/ASK/FSK/PSK.

In some embodiments, the method of the present disclosure further includes:
obtaining resource related information of the uplink signal; where the resource related information is used to generate the uplink signal and/or to determine a transmitting resource location of the uplink signal.

The resource related information is obtained based on at least one of resource information stored in the terminal, resource information configured by neighboring cell high layer signaling, resource information configured by core network signaling, resource information transmitted by broadcast signaling, or resource information defined by the protocol.

In some embodiments, the resource related information of the uplink signal includes at least one of the following:
generation related information of the uplink signal; or
resource location information of the uplink signal.

The generation related information includes at least one of a transmission frequency, the number of frequency domain units, patterns occupied by the frequency domain units, a time domain reference point, the number of time domain units occupied, the number of segments of the uplink signal, the number of points of the inverse fast Fourier transform IFFT, a sequence length of the uplink signal, a sequence length of at least one indication information in the uplink signal, or the number of at least one indication information in the uplink signal.

The resource location information includes at least one of time domain resource occasion information, frequency domain resource location information or spatial domain resource location information.

In some embodiments, the time domain resource occasion information includes at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

In some embodiments of the present disclosure, the time domain resource of the uplink signal may be periodic, semi-persistent, or transmitted in a certain pattern within a transmission time window, or associated with a specific signal or a specific channel. The above specific signal includes at least one of PSS, SSS, SSB, SIB1, TRS, PRS, PT-RS, random access preamble, SRS, DMRS, or CSI-RS. The specific channel includes at least one of PUCCH, PDCCH, PBCH, PRACH, PSSCH, PDSCH, or PUSCH.

For example, the time domain resource occasion of the uplink signal can be configured for periodic transmission or semi-persistent transmission. The base station can continuously detect the uplink signal or detect it based on a detection window, which depends on the implementation of the base station. The detection window can also be periodic or timer-triggered. The transmission period of the uplink signal can be a default period, for example, as defined by the protocol, or consistent with the default period of a specific reference signal, such as the default period of SSB, which is 20 ms.

When the uplink signal is semi-persistently transmitted, transmission may be initiated by the terminal when it needs to wake up or trigger a specific cell to provide services. The transmission time of the uplink signal may be based on the system frame number (SFN).

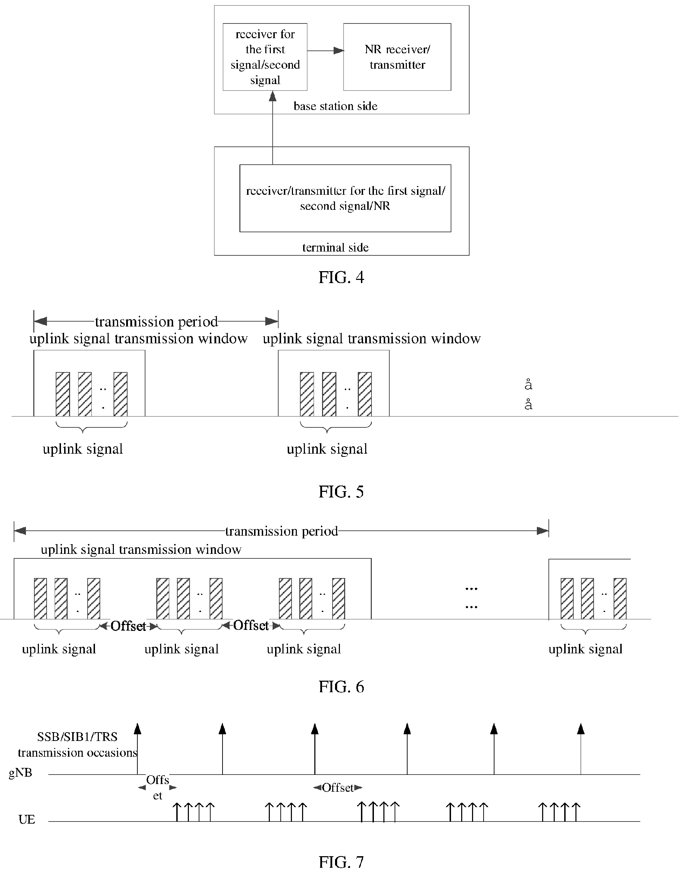

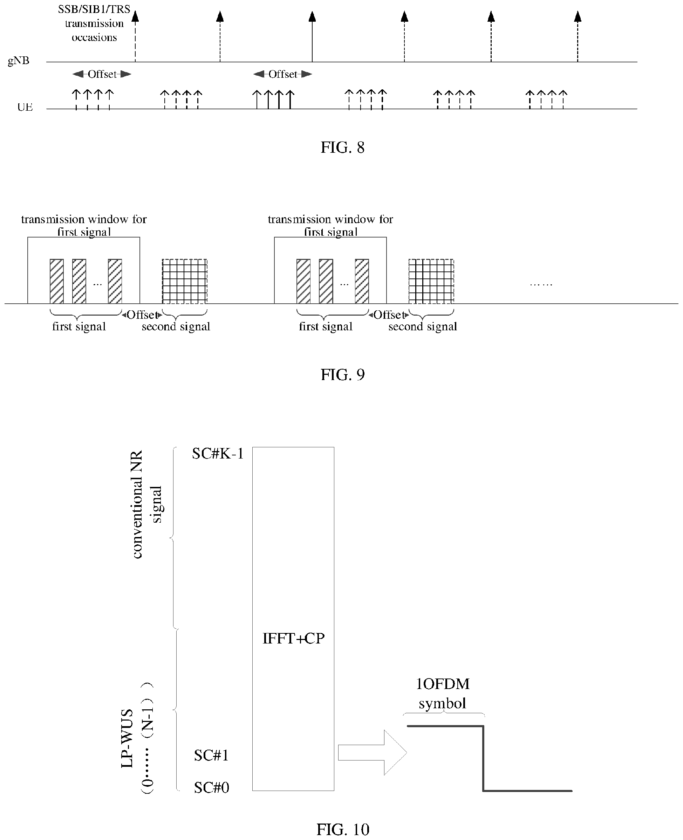

For another example, the uplink signal is transmitted within a specific time window. The time window may be a time window for repetitive transmission (as shown in FIG. 5), or a time window for continuous transmission of the uplink signal (as shown in FIG. 5), or a time window within which the uplink signal is transmitted in a specific pattern (as shown in FIG. 6). For another example, there is an association relationship between the uplink signal and a specific reference signal. For instance, there is a specific offset between a transmission occasion of the uplink signal and an occasion of a specific reference signal or a specific channel. Here, the specific offset can be a value greater than or equal to 0 (as shown in FIG. 8) or a value less than or equal to 0 (as shown in Fig. 9).

In some embodiments, there is an association relationship between the discovery information and the trigger information. For example, a transmission period of the trigger information is S times or 1/S of a transmission period of the discovery information, where S is a positive integer. Alternatively, when the two information are carried by the same signal, the discovery information occupies M1 slot symbols, and the trigger information occupies M2 slot symbols. Alternatively, there is a specific timing relationship between a first sequence signal carrying the trigger information and a second sequence signal carrying the discovery information, such as a difference of M3 time units or M4 sequence lengths. Alternatively, there is a specific time offset between a first signal carrying the trigger information and a second signal carrying the discovery information, such as a difference of M5 time units. Here, the time unit can be a slot, a symbol, a millisecond, or a second. The sequence length can be bit information or a time unit corresponding to bit information.

In some embodiments, the frequency domain resource information of the uplink signal includes at least one of the following: a subcarrier where the uplink signal is located; a bandwidth part BWP or frequency point where the uplink signal is located, such as a dedicated frequency or dedicated BWP where the uplink signal is located; a transmission pattern of the uplink signal in the frequency domain.

For example, a specific BWP corresponding to a specific carrier frequency can be used for uplink signal transmission. Within this BWP, there are a total of N subcarriers, and the uplink signal may occupy M of these subcarriers, where M is an integer less than or equal to N. The M subcarriers can be M subcarriers with the smallest indices among the N subcarriers, M subcarriers with the largest indices, a random set of M subcarriers, or M subcarriers following a specific pattern. The specific pattern can be obtained in at least one of the following ways: configured by the base station, pre-configured by the terminal, pre-stored by the terminal, obtained according to the terminal ID or cell ID or parameters related to a generated sequence, or generated according to a scrambling code or a pseudo-random sequence.

In some embodiments, the spatial resource location information of the uplink signal includes beam-related information of the uplink signal, such as transmission via an omnidirectional antenna and/or transmission in a specific beam direction.

For example, when the uplink signal carries the discovery information, it can be transmitted through an omnidirectional antenna, or it can be transmitted in different beam directions in a time-division manner. When the terminal receives a response signal corresponding to a specific beam, the target cell can be determined.

For another example, when the terminal can obtain coarse synchronization or receives a response signal transmitted by the target cell, the terminal can also transmit an uplink signal carrying the discovery information and/or trigger information on a specific beam, based on the coarse synchronization and/or the response signal.

In some embodiments, the method of the present disclosure further includes:
obtaining a response signal for the uplink signal;
where the response signal carries at least one of the following:
acknowledgment information of the first signal;
feedback information of the first signal;
a second reference signal and/or second channel; where the second reference signal is a reference signal used for the terminal to determine whether to wake up a dormant cell subsequently, or a reference signal for providing a specific function for the terminal; for example, the specific function may be synchronization, measurement or positioning functions;
cell information of a cell that transmits the response signal; or,
specific cell information.

In some embodiments, the second reference signal includes at least one of the following: PSS, SSS, SSB, TRS, PRS, PT-RS, SRS, DMRS, or CSI-RS.

In some embodiments, the second channel includes at least one of the following: PUCCH, PDCCH, PBCH, PRACH, PSSCH, PDSCH, or PUSCH.

In one embodiment of the present disclosure, the uplink signal may include at least one uplink signal, and the response signal includes a response signal for the at least one uplink signal. The at least one uplink signal may be transmitted simultaneously or transmitted in a certain sequence.

For example, the uplink signal includes two uplink signals, including a first signal and a second signal. The first signal carries discovery information, or carries discovery information and trigger information; and the second signal carries trigger information, or carries discovery information and trigger information. That is, the first signal and the second signal can be the same, such as both carrying discovery information and trigger information; or they can be different, for instance, the first signal carries the discovery information and the second signal carries the trigger information. The signal types of the first signal and the second signal can be the same or different. For example, the first signal is a modulation signal based on OOK/ASK/FSK/PSK, and the second signal is an uplink control signaling or an uplink reference signal based on NR.

The terminal transmits a first signal, and the network side device performs detection of the first signal; when the signal information of the first signal meets a specific condition, the network side device transmits a response signal for the first signal. For example, the base station transmits the response signal for the first signal when the amplitude/phase/power/energy of the first signal meets a specific threshold or a specific value or a specific value range. The response signal for the first signal may be a modulation signal based on OOK/ASK/FSK/PSK, or may be a specific reference signal. The terminal then transmits a second signal. The second signal may be transmitted after a specific time gap following reception of the response signal for the first signal transmitted by the cell, or transmitted at a specific time gap relative to the transmission time of the first signal. The trigger information carried by the first signal or second signal can be obtained through one or more of the following ways: configuration via neighbor cell higher-layer signaling, configuration via core network signaling, broadcast signaling transmission, or protocol specification.

The information carried by the first signal and/or the second signal may be indicated explicitly or implicitly. After the target cell receives the first signal, transmits a response signal or receives the second signal, the target cell is woken up, triggers transmission/reception of a specific reference signal, or switches to a target cell state, based on the corresponding signal and/or information carried therein.

In some embodiments, there is a certain time offset between the first signal and the second signal. The time offset can be determined based on at least one of the following ways: a specific timer, high layer signaling pre-configuration, protocol definition, terminal pre-storage.

In one embodiment of the present disclosure, the network side device may perform detection of the first signal in the following manner.

When the base station detects the first signal, the base station obtains one of related information such as amplitude/phase/power/energy of the first signal, for example, obtaining a power value of the signal as P, or obtaining an amplitude value of the signal as A, or obtaining an energy value of the signal as E, or obtaining phase information of the signal as θ. Assuming that the specific condition is that a power value is greater than a power value threshold P0, in case that the base station detects that the power value P of the first signal is greater than the power value threshold P0, the base station determines that the current terminal is within a service range of the base station; otherwise, the base station determines that the current terminal is not within the service range of the base station.

Assuming the specific condition is that an amplitude value is greater than the amplitude threshold A0, in case that the base station detects that the amplitude value A of the first signal is greater than the amplitude threshold A0, the base station determines that the current terminal is within the service range of the base station; otherwise, the base station determines that the current terminal is not within the service range of the base station.

Assuming the specific condition is that an energy value is greater than the energy threshold value E0, in case that the base station detects that the energy value E of the first signal is greater than the energy value threshold value E0, the base station determines that the current terminal is within the service range of the base station; otherwise, the base station determines that the current terminal is not within the service range of the base station.

Assuming that the specific condition is that a phase value is within the phase value range {Θmax, Θmin}, in case that the base station detects that the phase value θ of the first signal is within the phase value range, the base station determines that the current terminal is within the service range of the base station; otherwise, the base station determines that the current terminal is not within the service range of the base station. For example, when transmitting the first signal, the terminal may apply different phase modulations for base stations in different directions, with {0, π} for cells in one direction and {π, 2π} for cells in another direction. The base station performs coherent demodulation on the received signal to obtain the phase value range of the first signal.

Assuming that the specific condition is that the indication information carried by the first signal is a specific value, such as N bits are all 1; in case that the base station detects that the indication information carried by the first signal satisfies the specific value, the base station determines that the current terminal is within the service range of the base station; otherwise, the base station determines that the current terminal is not within the service range of the base station.

When the base station determines that the current terminal is within the service range of the base station, the dormant cell is awakened and transmits an SSB signal, or CSI-RS or a reference signal for positioning to provide regular services to the terminal; otherwise, the dormant cell will not be awakened.

In one embodiment of the present disclosure, when the terminal transmits the first signal, the terminal may also transmit a second signal to further provide additional information to the base station. The additional information includes at least one of the following: enhanced or supplementary information of the first signal, i.e., information that improves reception performance of the first signal or provides supplementary information of the first signal.

For the second signal including information used to improve the reception performance of the first signal, for example, the second signal is a repetition signal of the first signal, or the second signal carries information related to the first signal, but the first signal and the second signal are two different signals. Transmitting the second signal by the terminal can enhance the base station's ability to detect the terminal and obtain the information carried by the first signal and/or the second signal.

For the second signal used to provide supplementary information of the first signal, for example, the first signal is based on a broadcast transmission when the terminal and the base station are not synchronized or not finely synchronized, and is used as a signal for the base station to discover the terminal. The second signal can be transmitted as supplementary information of the terminal, such as the version or type of the terminal, to allow target cells capable of serving the terminal to be discovered. After the base station detects the first signal, the base station detects the second signal; if a cell can provide services for the terminal, the base station performs at least one of the following: waking up the cell as a target cell; triggering the cell to transmit or receive the second object; or triggering the cell to switch to the second state. In this way, by transmitting the second signal, the accuracy of waking up or triggering the target cell can be improved, thereby enhancing the energy-saving performance of the network.

In some embodiments, the method of the present disclosure further includes:
at a first moment, transmitting and/or receiving a second object of the target cell;
where the first moment includes at least one of the following:
a moment that is offset by a first duration from a transmission time of the first signal; or
a moment that is offset by a second duration from a reception time of a first response signal for the first signal.

The target cell includes at least one of the following:
at least one cell indicated by the trigger information;
at least one cell that transmits the response signal;
at least one cell indicated by the response signal;
a cell accessed by the terminal.

The second object includes at least one of the following:
synchronization signal/physical broadcast channel signal block (SSB) or system information block (SIB1) transmitted by the target cell;
at least one of a reference signal or a channel transmitted by the target cell;
at least one of a first reference signal or a first channel indicated by the trigger information;
at least one of a reference signal or a channel corresponding to a specific function indicated by the trigger information;
at least one of a reference signal or a channel corresponding to terminal requirement information indicated by the trigger information;
at least one of a reference signal and a channel corresponding to a target cell state indicated by the trigger information;
at least one of a reference signal or a channel under default parameter configuration;
at least one of a reference signal or a channel under parameter configuration carried by a broadcast channel or broadcast message of an access cell;
a second reference signal and/or a second channel indicated by the response signal.

The above reference signal includes at least one of PSS, SSS, SSB, TRS, PRS, PT-RS, random access preamble, SRS, DMRS, or CSI-RS. The above channel includes at least one of PUCCH, PDCCH, PBCH, PRACH, PSSCH, PDSCH, or PUSCH.

In the embodiment of the present disclosure, an uplink signal is transmitted, and the uplink signal carries at least one of discovery information or trigger information; the discovery information is used to discover the terminal; and the trigger information is used for at least one of the following: waking up a target cell, triggering a target cell to transmit and/or receive a first object which includes at least one of a first reference signal and a first channel, or triggering a target cell to switch to a target cell state. In this way, through the above discovery information and/or trigger information, the purpose of waking up the dormant cell or triggering the dormant cell to wake up for providing services can be achieved.

The solution of the present disclosure is described in detail hereinafter with reference to embodiments.

Embodiment 1: structure of a transceiver for an uplink signal (taking the above first signal and/or second signal as an example for explanation).

As shown in FIG. 3 and FIG. 4, a transmitter of the terminal for transmitting the first signal and/or the second signal may be a transmitter independent of a transmitter of an uplink NR signal, or may be the same transmitter.

The receiver of the base station for receiving the first signal and/or the second signal may be a receiver independent of the receiver of the uplink NR signal, or may be the same receiver.

A receiver of the base station for receiving the first signal and/or the second signal may be a receiver independent of a receiver of an uplink NR signal, or may be the same receiver.

When the first signal and/or the second signal include signals with different functions, the transceivers (transceivers) of the different signals are different.

For example, when the first signal (carrying discovery information used to discover the terminal; this signal can also be described as a discovery signal) is an OOK/ASK/FSK/PSK modulation signal, the transceiver for this the signal is independent of the transceiver of NR, where the first signal includes at least an OFDM-based OOK/ASK/FSK/PSK signal.

When the second signal (carrying trigger information used to wake up the target cell, trigger the target cell to transmit and/or receive a first object which includes at least one of a first reference signal and a first channel, and/or trigger the target cell to switch to the target cell state; this signal can also be described as a trigger signal) is an OOK/ASK/FSK/PSK signal, the transceiver is independent of the transceiver of NR, and can also be the same transceiver as the transceiver of NR. The second signal can include at least an OFDM-based OOK/ASK/FSK/PSK signal.

The second signal (carrying trigger information used to wake up the target cell, trigger the target cell to transmit and/or receive a first object which includes at least one of a first reference signal and a first channel, and/or trigger the target cell to switch to the target cell state) is a signal based on the NR signal, that is, CP-OFDM signals are supported on the uplink/downlink, and DFT-S-OFDM signals can be supported on the uplink. The transceiver for this signal is the same as the transceiver for NR. The signal based on the NR signal include at least one of reference signals and channels based on NR. The reference signal includes at least one of the following: PSS, SSS, SSB, TRS, PRS, PT-RS, random access preamble, SRS, DMRS, or CSI-RS. The channel includes at least one of the following: PUCCH, PDCCH, PBCH, PRACH, PSSCH, PDSCH, or PUSCH.

In one embodiment of the present disclosure, in case that the receiver for the first signal and/or the second signal is independent of the receiver of the uplink NR signal, the network side base station does not need to keep the corresponding NR receiver always on, but only needs to detect the first signal and/or the second signal. The receiver for the signal consumes only about one-tenth of the power of the NR receiver, thereby achieving energy saving on the network side.

In case that the transmitter for the first signal and/or the second signal is the same as the transmitter for the uplink NR signal, the terminal can enable the base station to discover it only through a low-power transmitter.

In case that the transmitter for the first signal and/or the second signal is different from the transmitter for the uplink NR signal, the terminal only needs to transmit the first signal and/or the second signal via an independent transmitter. Since this signal can be a relatively frequent and dense signal, this can help reduce the power consumption of the terminal.

In case that the first signal and/or the second signal is an OFDM-based OOK/ASK/FSK/PSK modulated signal, the architecture of the NR transceiver in the related art can be utilized to further simplify the complexity of the transceiver, and the detection based on OOK/ASK/FSK/PSK modulation can greatly reduce the power consumption of the receiving end, thereby achieving energy saving.

Embodiment 2: method for obtaining uplink signal resource related information.

The method for the terminal and/or base station to obtain uplink signal resource related information can be based on one or more of the following: information stored in the terminal, information configured via neighbor cell higher-layer signaling, information configured via core network signaling, information transmitted via broadcast signaling, or information specified in the protocol.

For example, the terminal needs to obtain resource-related information after powering on, thereby enabling the terminal's discoverability and/or triggering functionality, which can be achieved in at least one of the following manners.

Manner 1: a subscriber identity module (SIM) card includes Public Land Mobile Network (PLMN) identifier and operating frequency as well as stored PLMN related information; the center frequency of the uplink signal can be a frequency with a specific relationship with the operating frequency of the PLMN. For example, the SIM card stores PLMN related information, and when the terminal is turned on, the frequency search can be performed through the PLMN information stored in the SIM card.

Manner 2: obtaining based on pre-stored information in a device that supports transmitting/receiving uplink signals, such as pre-stored information in the device that supports transmitting/receiving uplink signals, information written into dedicated chips for uplink signals. For instance, when the device that supports transmitting/receiving uplink signals is powered on, it can read from the pre-stored information in the device or read from a dedicated chip for uplink signals inserted into the device.

Manner 3: obtaining based on information configured by core network signaling. For example, service cells under the jurisdiction of the same operator all carry uplink signal resource related information through non-access stratum (NAS) signaling. Here, the core network signaling can carry generation information and/or time/frequency/spatial resource location related information for uplink signals.

For instance, an NAS message during the PLMN selection process may be used.

It is to be noted that when the terminal receives the NAS message, since the NAS message is transparently transmitted in an RRC message, it is assumed by default that the terminal has completed synchronization, measurement, and reception of broadcast messages.

Manner 4: obtaining through configuration of an adjacent serving cell high layer signaling. For example, in a Carrier Aggregation (CA) scenario, SIB information in an anchor cell carries the above resource related information.

Manner 5: obtaining resource related information through SIB1 configured through broadcast signaling transmitted by a dormant cell. For example, the dormant cell still transmits SIB1 information with a longer period in the dormant state, and the resource-related information is carried in the SIB1 information.

Manner 6: determining resource-related information through a default parameter configuration specified in the protocol, where the default parameter configuration specified in the protocol includes, such as, default frequency, bandwidth, or a center frequency used by the terminal during cell search. That is, the default frequency, bandwidth for signals transmitted by terminals of a specific version or terminals supporting the function of waking up or triggering base stations.

It is to be noted that when the terminal cannot synchronize with the dormant base station, the resource information of the uplink signal can be obtained only based on priori information and/or relevant information provided by a neighboring cell. The priori information includes information obtained from at least one of the following: SIM card, dedicated SIM card for uplink signals, core network, neighboring cells, etc.

When the terminal can achieve initial synchronization with the dormant base station, for example, when the dormant cell transmits extremely sparse SSB information, the terminal can obtain a certain initial synchronization, or obtain corresponding synchronization information via SSBs transmitted by a co-sited neighboring cell.

Example 3: information carried by an uplink signal.

When the uplink signal is used as a discovery signal (carrying discovery information), the terminal transmits the uplink signal at a specific resource location for the base station to discover the terminal, and/or for the base station to determine whether to be awakened based on the uplink signal.

When the uplink signal carries discovery information and trigger information, the terminal transmits the uplink signal at a specific resource location and carries corresponding information for the base station to discover the terminal, and/or for the base station to determine whether to be awakened and/or transmit and/or receive a first object based on the uplink signal, and/or triggering the target cell to switch to the target cell state. After the base station receives the uplink signal, there are at least one of the following situations:

Situation 1: after receiving the uplink signal, the base station is directly woken up once it is determined that a specific condition is met, that is, the base station transmits/receives a reference signal/channel/message according to the default parameter configuration. Here, the specific condition may include that amplitude/phase/power/energy of the signal meets a specific threshold, a specific value or a specific value range.

Situation 2: after the base station receives the uplink signal and determines that a specific condition is met, the base station transmits a specific reference signal according to a pre-configured or protocol-defined parameter configuration. Here, the reference signal can be at least one of SSB, SIB1, TRS, CSI-RS, SRS, PRS, PT-RS. The pre-configured or protocol-defined parameter configuration may include at least one of the following: a parameter configuration different from those used when the base station is in a normal state, a dedicated parameter configuration for an energy-saving state, or a parameter configuration pre-defined by the protocol. By taking SSB as an example, when the base station is in a dormant or energy-saving state, the base station does not transmit SSB signal or transmits extremely sparse SSB signals, e.g., with a period of 640ms. When the base station detects an uplink signal and a certain condition is met, the base station transmits SSB signals according to the default configuration, e.g., with a 20 ms period, or transmits SSB signals based on a specific parameter configuration, e.g., with a 320 ms or 160 ms period, or transmits SSB according to the default configuration within a specific time window.

The specific condition may be that the amplitude/phase/power/energy of the signal meets a specific threshold or a specific value or a specific value range.

Situation 3: after the terminal transmits an uplink signal, the terminal receives, after a specific time gap, a specific reference signal according to a pre-configured or protocol-defined parameter configuration. Here, the reference signal can be at least one of SSB, SIB1, TRS, CSI-RS, SRS, PRS, PT-RS. The pre-configured or protocol-defined parameter configuration can include at least one of the following: a parameter configuration different from those used when the base station is in a normal state, a dedicated parameter configuration for an energy-saving state, or a parameter configuration pre-defined by the protocol. By taking SSB as an example, after the terminal transmits the uplink signal, following a specific time gap such as a default duration of T ms, the terminal receives SSB signals according to a default 20 ms period, or receives SSB based on a specific parameter configuration (e.g., a 320 ms or 160 ms period), or receives SSB according to the default configuration within a specific time window.

The specific time gap may be determined by at least one of protocol definition, high-layer signaling configuration, core network signaling indication, or terminal pre-storage.

Situation 4: the base station may also be awakened according to the information carried by the uplink signal; or transmit and/or receive an indicated specific signal and/or channel.

Situation 5: the terminal may also transmit and/or receive an indicated specific signal and/or channel according to information carried by the uplink signal.

The uplink signal can carry at least one of the following information:
sequence information of specific information, i.e., protocol-defined or pre-configured sequence information used for signal detection by the base station;
first indication information, such as wake-up cell indication information, used to indicate whether to wake up a dormant cell;
second indication information, such as indication information of transmitting/receiving a specific reference signal, which is used to indicate a cell to transmit/receive a specific reference signal;
third indication information, such as cell state indication information, which is used to indicate a cell to switch between at least one state, or switch to a target cell state;
fourth indication information, such as cell identifier related information, used to indicate related cell information for wake-up or transmission/reception of uplink signals/channels;
fifth indication information, such as function trigger indication information, used to instruct a cell to turn on or off a specific function, such as access, measurement, synchronization, positioning, energy saving, and specific service transmission;
sixth indication information, such as a terminal specific identifier, used to indicate a specific type of the terminal or a terminal identity;
seventh indication information, such as terminal demand information related identifier, used to indicate a current service requirement of the terminal, such as access, measurement, synchronization, positioning, energy saving, and specific service transmission requirements.

The following provides detailed descriptions of information carried by the uplink signal.
(1) The uplink signal is a modulation signal sequence with a specific pattern, which is used for base stations to receive and detect signals. For example, a modulation signal with a specific sequence is used for base stations to identify an uplink signal when receiving and detecting the uplink signal.

It can be understood that the uplink signal does not carry other information, but only provides the base station with relevant information for energy detection.

For example, the uplink signal is a sequence with a fixed pattern of length N, e.g., a modulation sequence of length N or N/(K-1) generated by performing 2^{K} order modulation (i.e., OOK/ASK/FSK/PSK modulation) on a sequence of N consecutive all-1 bits, where N is an integer greater than or equal to 1.

For example, in an OOK signal, "1" is modulated as a symbol with an amplitude A, and "0" is modulated as a symbol with an amplitude 0 or an amplitude other than A. During signal detection at the base station, envelope demodulation is used. If, after envelope demodulation, a specific condition is met, for example, if a signal whose energy accumulates over a period T or whose duration is T1 meets an amplitude threshold, then the uplink signal is determined to meet the specific condition. The information carried by this method is limited.

For example, in an ASK signal, "1" is modulated into a symbol with an amplitude of A, and "0" is modulated into a symbol with an amplitude other than A. During signal detection at the base station, envelope demodulation is used. If, after envelope demodulation, a specific condition is met, for example, if detecting a signal whose energy accumulates over a period of time T or whose duration is T1 meets an amplitude threshold, then the uplink signal is determined to meet the specific condition.

For example, in FSK signal, "1" is modulated on a symbol with a frequency F1, "0" is modulated on a symbol with a frequency F2, or "1" is modulated on a symbol with a frequency band B1, "0" is modulated on a symbol with a frequency band B2. During signal detection, the base station uses filter demodulation. If a symbol energy obtained through filtering demodulation at different frequencies or bandwidths meets an amplitude threshold for a signal with a duration T1, then the uplink signal is determined to meet the specified condition.

The uplink signal is a sequence with a specific pattern of a length N, such as a sequence in which the bit "1" occupies a certain time proportion, "1010...10" or "1...10...0". After 2K order modulation (i.e. OOK/ASK/FSK/PSK modulation), a modulation sequence with a length of N or N/(K-1) is generated. This method can carry corresponding information through different sequences, but the probability of false detection in this case will be relatively high. N is greater than or equal to 1. According to this method, corresponding information can be carried by different sequences, but in this case, the probability of false detection tends to be relatively high. N is greater than or equal to 1.

(2) The uplink signal carries first indication information (such as wake-up cell indication information).

The wake-up cell indication information is 1-bit information, used to indicate to wake up a target cell; that is, a value of "1" means to wake up the target cell,, and a value of "0" means that the target cell does not need to be woken up. The wake-up cell indication information can be transmitted based on a specific parameter configuration.

The wake-up cell indication information may be carried by a discovery signal (such as an uplink signal that only carries discovery information), that is, if the target cell detects the discovery signal, the target cell is awakened; otherwise, the target cell is considered not to be awakened. That is, the wake-up cell indication information is implicitly indicated by the discovery signal.

The wake-up cell indication information may also be N bits of information, where N is an integer greater than 1, such as an N-bit sequence of a specific pattern. The terminal transmits it at a pre-configured or protocol-defined resource location, and the specific pattern sequence of the N-bit information may be pre-stored or pre-configured. The wake-up cell indication information may be sequence information cascaded in the discovery signal, or may be sequence information located at a pre-configured or protocol-defined resource position following the sequence information of certain specific information. For example, after receiving the discovery signal, the base station obtains the discovery signal and demodulates it to obtain the wake-up cell indication information carried therein. For example, if the pattern sequence carried by the discovery signal matches a pre-stored or pre-configured pattern sequence, the target cell is considered to be awakened; otherwise, the target cell is considered not to be awakened.

(3) The uplink signal carries indication information including at least one of the following: cell identity information, function identifier, specific reference signal, and cell state indication information.

The uplink signal may also carry trigger information, including at least one of: cell identifier related information, indication information of transmitting/receiving a first object, function trigger indication information, terminal demand information related identifier, or cell state indication information. The above indication information may be indicated separately or jointly. The following provides specific examples for illustration.

When the above indication information is indicated separately, the following are only examples of typical use cases.

Example 1: an uplink signal carries cell identifier related information:
The terminal can obtain in advance relevant information of cells that can be awakened or triggered, such as frequency list, cell list, etc. Based on the pre-configured or pre-obtained relevant information of cells, classification can be performed according to the relevant information of cells, corresponding respectively to different frequencies cells, different cell IDs, or index values of different cells in a cell list. Different sequences are generated for different categories, for example, different OOK modulation pattern modulated symbol sequences correspond to different cells or cell groups; or ASK modulated symbol sequences with different amplitude patterns correspond to different cells or cell groups; or FSK modulated symbol sequences with different frequency-domain patterns correspond to different cells or cell groups. If the terminal can obtain a target cell ID or an index value of the target cell in a cell list, the terminal generates an uplink signal based on the target cell ID or the index value of the target cell in the cell list. The terminal then transmits the uplink signal carrying cell identity related information to surrounding base stations.

After receiving the uplink signal, the base station performs detection based on the OOK/ASK/FSK/PSK modulation sequence. If the cell related information carried in the uplink signal matches the pre-configured or pre-obtained cell-related information, the base station determines that the current cell is the target cell triggered by the uplink signal. Then the target cell transmits a specific signal and/or channel according to the trigger information carried in the uplink signal and/or protocol specifications.

For example, in the related art, there are 1008 physical cell identifiers (PCIs) in the system, ${N}_{ID}^{\left(1\right)} ∈ \left\{0,1,…,335\right\} , { N}_{ID}^{\left(2\right)} ∈ \left\{0, 1, 2\right\}$. If only ${N}_{ID}^{\left(2\right)}$ is used for cell identification, the uplink signal only needs to carry 7 bits of information.

Example 2: an uplink signal carries indication information of transmitting and/or receiving a specific reference signal; in case that the uplink signal is used to trigger the base station to transmit and/or receive some reference signals, the uplink signal may carry indication information of at least one reference signal, and different reference signals are indicated by Si bits respectively, as shown in Table 1:

**Table 1**

| Function 1: SSB | Function2: SIB | Function3: TRS | ...... | Function N: PRS |
|---|---|---|---|---|
| S1 bits | S2 bits | S3 bits | | SN bits |

When indication information of each reference signal has only 1 bit, the value "0 or 1" can be used to indicate "transmission/not transmission" of the corresponding reference signal.

When indication information of each reference signal includes one or more bits, one of its values is used to indicate a specific set of parameter configuration in at least one set of parameter configurations for the corresponding reference signal, or a specific value is used to indicate transmission/not transmission" of the corresponding reference signal.

When the uplink signal is used to trigger transmission of some reference signals at the base station, the uplink signal may carry indication information for at least one type of reference signal. Different reference signals are jointly indicated through N bits, as shown in Table 2:

**Table 2**

| indication information of transmission/reception of specific reference signal | specific indication content |
|---|---|
| value 1/pattern 1 | transmit SSB and/or SIB1 according to parameter configuration 1 |
| value 2/pattern 2 | transmit SSB and/or SIB1 according to parameter configuration 2, transmit TRS according to parameter configuration 3 |
| ...... | ...... |
| value 2^{N}/pattern 2^{N} | transmit SSB and/or SIB1 according to parameter configuration 1, transmit PRS according to parameter configuration 4, transmit TRS according to parameter configuration 3 |

Example 3: an uplink signal carries different function indication information.

When the uplink signal carries different function indication information, such as indicating at least one of the functions such as wake-up, measurement, synchronization, and positioning, different functions can be indicated by Yi bit respectively, or at least one function can be jointly indicated by at least one value or pattern among N bits.

For example, Y1, Y2, Y3, ..., YN are greater than or equal to 1. When the indication information for a function is 1 bit, it can indicate that the function is "enabled/maintained" or "disabled", as shown in Table 3.

**Table 3**

| Function 1: wake-up | Function 2: Measurement | Function 3: synchronization | ...... | Function N: positioning |
|---|---|---|---|---|
| Y1 bits | Y2 bits | Y3 bits | | YN bits |

Different functions correspond to transmission and/or reception of a reference signal with at least one specific parameter configuration, as shown in Table 4.

**Table 4**

| function indication information | content corresponding to specific indication information |
|---|---|
| Function 1 | transmit SSB and/or SIB1 according to parameter configuration 1 |
| Function 2 | transmit SSB and/or SIB1 according to parameter configuration 2, and transmit TRS according to parameter configuration 3 |
| ...... | ...... |
| Function N | transmit SSB and/or SIB1 according to parameter configuration 1, transmit PRS according to parameter configuration 2, ..., and transmit TRS according to parameter configuration 3 |

Here, the specific function indication may be transmission and/or reception of a specific reference signal under at least one specific parameter configuration.

For example, when the function indication is a wake-up function, and/or the function indication information indicates "wake-up"; after a certain time gap after transmitting the indication information, the terminal can receive SSB/SIB1, paging, TRS, PEI signaling, etc., or transmit at least one of a random access (RA) request or a scheduling request SR.

For another example, when the function indication is a positioning function, and/or the function indicates transmission and/or reception of a reference signal with at least one specific parameter configuration; after a certain time gap after transmitting the indication information, the terminal can receive at least one of SSB, TRS, or PRS, and transmit SRS, where the parameter configuration can be pre-configured or protocol-defined.

For example, when the function indication is measurement, and/or the function indicates transmission and/or reception of a reference signal with at least one specific parameter configuration; after a certain time gap after transmitting the indication information, the terminal can receive at least one of SSB, TRS, or CSI-RS, PT-RS, where the parameter configuration can be pre-configured or protocol-defined.

At least one function may also be jointly indicated by at least one value or pattern in the N bits, as shown in Table 5.

**Table 5**

| Function indication information | specific indication content |
|---|---|
| Value 1/pattern 1 | Function 1 |
| Value 2/pattern 2 | Function 2 |
| Value 3/pattern 3 | Function 1+Function 2 |
| ...... | ...... |
| Value 2^{N}/pattern 2^{N} | Function 1+Function 3+... +Function K |

Example 4: an uplink signal carries terminal demand information related identifier information, that is, it is used to indicate the current service requirement of the terminal, such as access, measurement, synchronization, positioning, energy saving, specific service transmission The indication method for the terminal demand information related identifier information is similar to that for the function indication information, and can refer to the indication method of the function indication information, which will not be repeated here. The base station receives the terminal demand information related identifier information, and can further determine whether to provide the corresponding service to the user according to its needs. In some embodiments, the base station transmits its response information to the terminal to further indicate whether to provide the corresponding service to the terminal. In addition, the service type can be further indicated, such as Extended Reality (XR) service, Enhanced Mobile Broadband (eMBB) service, Ultra-Reliable & Low-Latency Communication (URLLC) service, massive Machine Type of Communication (mMTC) service, Artificial Intelligence & Internet of Things (AIoT) service, and other service type corresponding indication information. Upon receiving indication information related to the terminal's service requirements, the base station further determines, based on the indicated information, whether it should be woken up or triggered to transmit and/or receive the corresponding reference signals/channels, etc.

Example 5: an uplink signal carries cell state indication information.

When the uplink signal carries different cell state indication information, such as at least one of cell states including energy-saving state 1, energy-saving state 2, ..., and normal state, different cell states can be indicated by Xi bits respectively, or at least one function can be jointly indicated by at least one value or pattern in N bits. The following provides an illustrative example:

For example, X1, X2, X3, ..., XN are greater than or equal to 1. When the indication information for a cell state is 1 bit, it can indicate the cell state as "enabled/maintained" or "disabled", as shown in Table 6.

**Table 6**

| Cell state 1: light sleep State | Cell state 2: moderate sleep state 1 | Cell state 3: moderate sleep state 2 | Cell state 4: normal state | ...... | Cell state N: deep state |
|---|---|---|---|---|---|
| X1 bits | X2 bits | X3 bits | X4 bits | | XN bits |

Different cell states correspond to transmission and/or reception of a reference signal with at least one specific parameter configuration, as shown in Table 7.

**Table 7**

| Cell state indication information | Content corresponding to specific indication information |
|---|---|
| Cell state 1 | transmit SSB and/or SIB1 according to parameter configuration 1 |
| Cell state 2 | transmit SSB and/or SIB1 according to parameter configuration 2 |
| Cell state 3 | transmit SSB and/or SIB1 according to parameter configuration 3 |
| ...... | ...... |
| Cell state N | transmit SSB and/or SIB1 according to parameter configuration 1, transmit PRS according to parameter configuration 2, ..., and transmit TRS according to parameter configuration 3 |

### (4) an uplink signal carries a terminal specific identifier.

The uplink signal carries terminal specific identifier information, and the terminal specific identifier may be a terminal type identifier, a terminal version identifier, or an identifier for a terminal supporting specific services, such as: an identifier for terminal supporting latency-sensitive services (e.g., XR services) or an identifier for terminals exclusively served by a dormant base station. When the terminal specific identifier in the uplink signal received by the base station corresponds to a terminal that needs to be served by the current dormant cell, the cell is woken up or triggered to transmit and/or receive a specific reference signal.

### Embodiment 4

When the uplink signal carries discovery information and trigger information, it can carry specific sequence information for the base station to detect the uplink signal, and carry the trigger information of the target cell. Here, the trigger information can be indicated explicitly or implicitly. For explicit indication, only when the sequence information of the uplink signal meets a specific condition, the base station demodulates it to obtain the trigger information. For example, the uplink signal can be transmitted periodically, or semi-continuously, or repeatedly within a transmission window; the base station detects amplitude/energy/frequency/bandwidth/phase of the uplink signal within a detection window. When the corresponding threshold requirement is met, the uplink signal is demodulated/parsed to obtain the trigger information therein. For implicit indication, when the base station detects that the sequence information of the uplink signal meets a specific condition, the base station performs at least one of the following: being awakened, triggering to transmit/receive the first object, switching to a cell-specific state.

When the uplink signal carries the trigger information, one or more trigger information may be carried through specific sequence information, as shown in Table 8.

**Table 8**

| Function indication information | Specific indication content |
|---|---|
| Value 1/pattern 1 | Wake-up cell indication information |
| Value 2/pattern 2 | Positioning function, reference signal transmission/reception with parameter configuration #1 |
| Value 3/pattern 3 | Measurement function, reference signal transmission/reception with parameter configuration #2 (for service 1) |
| ...... | ...... |
| Value 2^{N}/pattern 2^{N} | Measurement function, reference signal transmission/reception with parameter configuration #K (for service 2) |

Embodiment 5: resource location information of an uplink signal.

The resource location of the uplink signal includes time domain/frequency domain/spatial domain/code domain, which can be obtained through at least one of terminal memory, neighboring cell high layer signaling configuration, core network signaling configuration, broadcast signaling. The uplink signal has at least one of the following characteristics:

First item: the time domain resource occasion of the uplink signal can be used for periodic transmission or semi-persistent transmission. The base station can detect the uplink signal continuously or based on the detection window, which depends on the base station implementation.

The transmission period of the uplink signal may be a default period, such as defined by a protocol, or may be consistent with a default period of a specific reference signal, such as a default period of 20 ms for SSB.

When the uplink signal is semi-persistently transmitted, transmission may be initiated by the terminal when it needs to wake up or trigger a specific cell to provide services. The transmission time of the uplink signal may be based on the system frame number (SFN).

Second item: the uplink signal is transmitted within a specific time window. The time window may be a time window for repetitive transmission (as shown in FIG. 5), or a time window for continuous transmission of the uplink signal (as shown in FIG. 5), or a time window within which the uplink signal is transmitted in a specific pattern (as shown in FIG. 6).

Third item: when the uplink signal carries trigger information, there is an association relationship between the uplink signal and a specific reference signal.

For example, the terminal obtains, from neighboring cells, potential occasions where a dormant cell can transmit SSBs; when the terminal needs a dormant cell to transmit SSBs, the terminal transmits an uplink signal at an occasion offset by a specific value from the SSB, to trigger the dormant cell to transmit SSBs.

For example, when the terminal detects the SSB transmitted by the target cell, the terminal transmits an uplink signal at a certain offset from the SSB to trigger the target cell to transmit a specific reference signal or trigger the cell energy saving state, as shown in FIG. 7.

For example, based on high layer signaling or core network signaling of a neighboring cell or a historical serving cell, the terminal obtains potential transmission occasions for SSB/SIB1/TRS of a dormant cell, and transmits an uplink signal at a certain time gap (GAP) before the specific reference signal to trigger whether the dormant cell transmits the corresponding reference signal. The time gap is determined based on an offset value as shown in FIG. 8.

Fourth item: the uplink signal includes a first signal (carrying discovery information, which may also be described as a discovery signal) and a second signal (carrying trigger information, which may also be described as a trigger signal). There is an association relationship between the first signal and the second signal, and the association relationship may be determined based on an offset value, as shown in FIG. 9.

When the first signal and the second signal are two independent signals, there is a certain time offset value between the first signal and the second signal. The second signal can correspond to the first signal in a one-to-one manner, that is, the transmission periods of the two are the same; or the second signal can be transmitted after at least one first signal, that is, the period of the second signal is N times the period of the first signal.

When the first signal and the second signal are the same signal, the second signal may be part or all of the first signal. For example, a discovery information sequence occupies N slot symbols, and the trigger information occupies K slot symbols therein; the K slot symbols may be K slot symbols starting from a specific position, or the first K or last K slot symbols in the discovery information, or K slot symbols with a certain pattern, where K is less than or equal to N.

### Embodiment 6:

When transmitting an uplink signal carrying trigger information, the terminal needs to obtain resource-related information of the corresponding signal, including one or more of generation related information of the signal, transmission resource information, or related information carried by the signal.

The generation related information of the uplink signal is used by the sender and receiver to determine/detect a transmitting occasion of the uplink signal, and at least includes: a transmission frequency of the uplink signal, bandwidth, number of occupied time domain units, number of at least one segment, number of IFFT points, sequence length of the uplink signal, etc. The frequency can be an operation frequency, center frequency or service frequency of the uplink signal.

For example, when the uplink signal is an OOK-1 signal, a center frequency of the frequency domain where the signal is located, the number of carriers, subcarrier spacing (SCS), the number of symbols (or duration of the uplink signal), and the number of IFFT points, are determined. The center frequency can be an initial access frequency/initial BWP.

In the above OOK-1 signal, as shown in FIG. 10, a low power wake-up signal (LP-WUS) includes N subcarriers (SC). After performing inverse fast Fourier transform (IFFT) and adding a cyclic prefix (CP) to the LP-WUS, one OFDM symbol corresponds to a single bit.

The subcarrier (SC) of the low power wake up signal (LP-WUS) is:
OOK=1 means that all SCs are used for modulation, corresponding to bit "1", or any one or several ones of K-order modulation symbols are corresponding to bit "1";
OOK=0 means that all SCs are zero power (from a baseband perspective), corresponding to bit "0", or any one or several ones of K-order modulation symbols are corresponding to bit "0".

In case that the uplink signal is an OOK-1 signal, the 1-bit information can be used to trigger a signal of one OFDM symbol. In order for the base station to detect the terminal, the signal can be transmitted repeatedly N times. The receiver at the base station can detect the user's signal continuously or in a specific time period. The specific detection method depends on implementation of the base station or is based on relevant information of the uplink signal sent by the terminal.

When the uplink signal is an OOK-2 signal, the number of signal segments M (which may be related to a symbol length and duration occupied by the signal), a maximum of M center frequencies, SCS, the number of carriers in each segment, the number of OFDM symbols (or uplink signal duration), and the number of IFFT points, are determined.

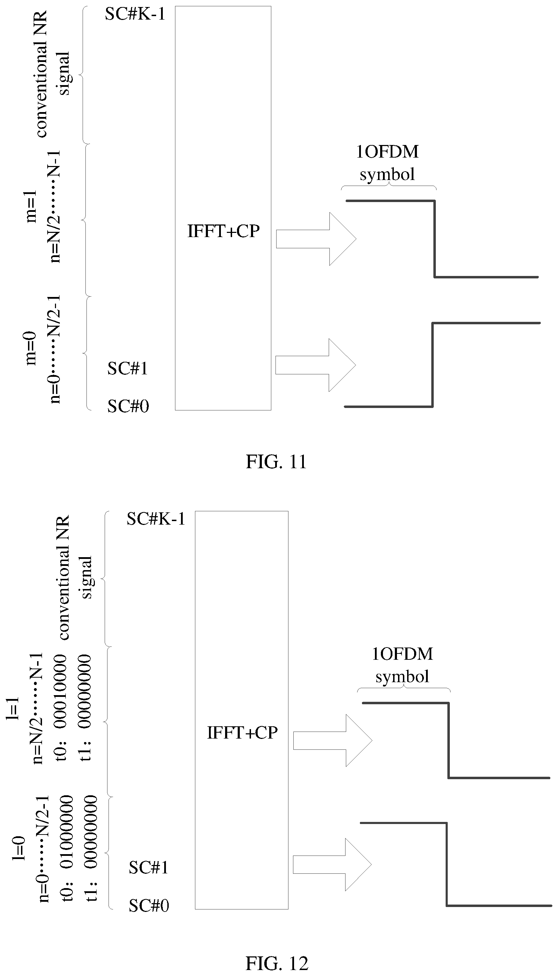

In the above OOK-2 signal, the N SCs of the LP-WUS are further divided into M segments, each of which includes N/2 subcarriers, as shown in FIG. 11, where M=2, and there may be guard bands between and/or around the segments. After performing inverse fast Fourier transform (IFFT) and adding a cyclic prefix (CP) to the LP-WUS, the LP-WUS corresponds to parallel M-bits OOK in the frequency domain. The SC of LP-WUS is:
OOK=1 means that all SCs in the segment have been modulated, corresponding to bit "1", or any one or several ones of K-order modulation symbols are corresponding to bit "1";
OOK=0 means that all SCs in the segment are zero power (from a baseband perspective), corresponding to bit "0", or any one or several ones of K-order modulation symbols are corresponding to bit "0".

In case that the first signal is an OOK-2 signal, M bits in the frequency domain can carry a terminal discovery signal; for example, the first signal is a specific sequence, such as M bits of 1, the base station can detect the terminal based on a sequence with a specific pattern, such as: "1010...1". The receiver at the base station can detect the user's signal continuously or in a specific time period. The specific detection method depends on implementation of the base station or is based on relevant information of the uplink signal sent by the terminal.

When the uplink signal is an OOK-3 signal, the number of segments L, SCS, the number of carriers in each segment, the number of OFDM symbols (or duration of the uplink signal), and the IFFT point count, are determined.

The N SCs of LP-WUS are divided into L segments, as shown in FIG. 12, where L=2. There is no guard band between segments, but there may be guard bands around the segments. After performing inverse fast Fourier transform (IFFT) and adding a cyclic prefix (CP) to the LP-WUS, a multi-tone single-bit OOK is obtained. t0 and t1 in FIG. 12 represent sequences corresponding to 0 and 1, respectively. The SC of LP-WUS is:
OOK=1 means that one subcarrier of each segment (known to the UE) is modulated, and the rest of the SC is zero power (from a baseband perspective), corresponding to bit "1";
OOK=0 means that all SCs in all segments are zero power (from a baseband perspective), corresponding to bit "0".

In case that the first signal is an OOK-3 signal, the same frequency domain sequence information can be carried in different segments, or different frequency domain sequence information can be carried in different segments. Under certain time/frequency domain deviations on the base station side, the receiver can continuously detect in the time domain and/or perform frequency domain scanning for detecting the first signal; it can also detect the user's signal in a specific time period or within a specific frequency domain resource range. The specific detection method depends on implementation of the base station or is based on relevant information of the first signal sent by the terminal.

When the uplink signal is an OOK-4 signal, a symbol length and duration occupied by the uplink signal, a center frequency in the frequency domain, SCS, the number of frequency domain carriers, and the number of IFFT points, are determined.

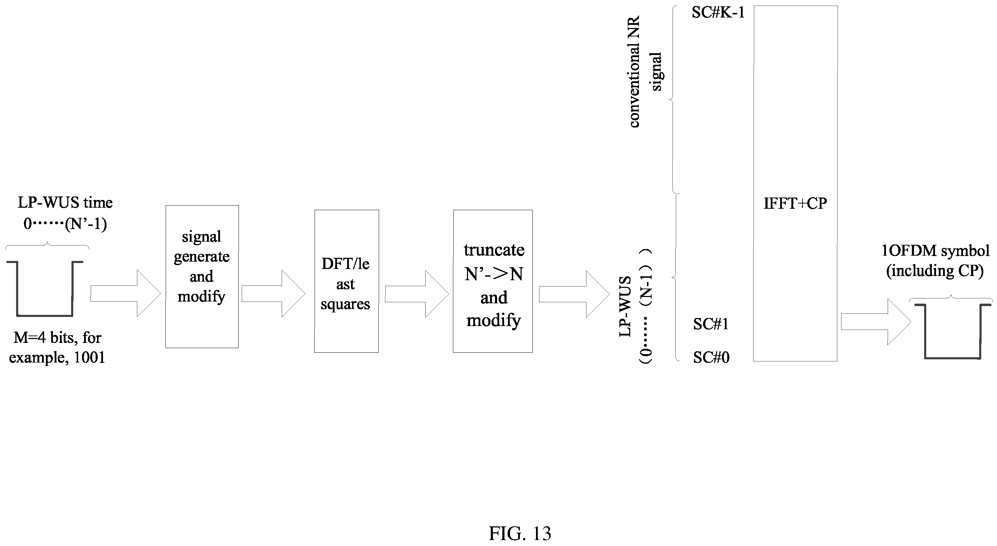

As shown in FIG. 13, N' samples are generated by M bits, and the N SCs of the LP-WUS are generated by transformation (DFT/least squares); signal modulation may be used or may not be used; truncation or other additional modulation may be used or may not be used, and if no other additional modulation is used, N is the same as N'. After performing inverse fast Fourier transform (IFFT) and adding a cyclic prefix (CP) to the LP-WUS, OOK-4 is obtained.

OOK-4 can be considered as an example of an OOK signal based on a single carrier (such as DFT-S-OFDM), and can also be used as a signal generation method independent of an uplink single carrier (such as DFT-S-OFDM).

Embodiment 7: regarding transmission procedure of an uplink signal (taking the first signal and the second signal as examples for illustration).

First implementation: the base station is woken up after receiving the uplink signal.

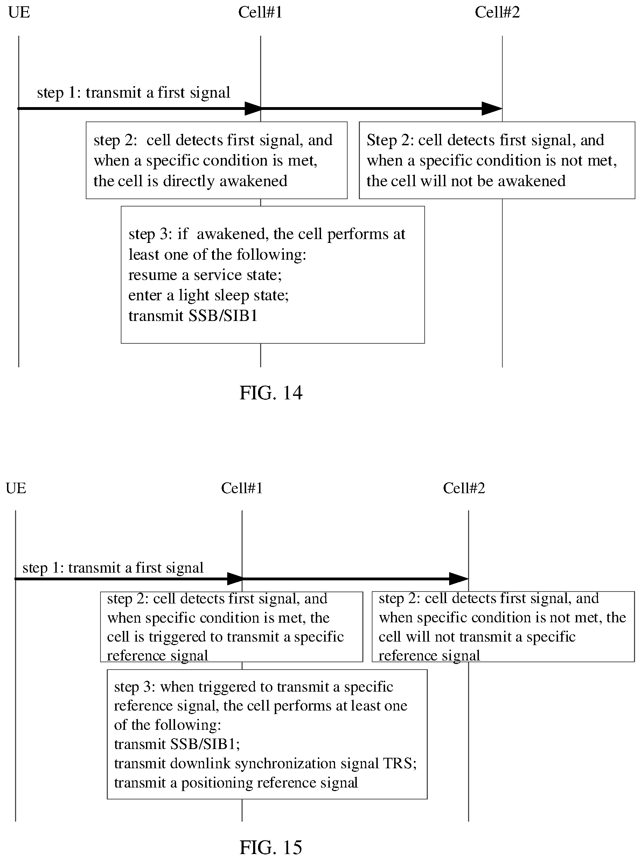

As shown in FIG. 14, the process includes:
At step 1, the terminal transmits a first signal for surrounding dormant cells/base stations (such as pico base stations) to discover terminals, where the discovery signal is an OFDM-based OOK/ASK/FSK/PSK signal. The first signal can be transmitted through a dedicated transmitter or through an NR transmitter. The first signal can be transmitted N times at a specific time point or time period, where N is greater than or equal to 1. The specific transmission occasions can be determined by one or more of the following ways: configured by neighbor cell higher layer signaling, configured by core network signaling, indicated via broadcast signaling, or specified by protocol.

At step 2, the base station performs detection of the first signal and obtains information carried by the first signal, where the information includes signal information and/or indication information carried therein. In case that the first signal meets a specific condition (i.e., the first condition), the cell is directly awakened, or, in case that the first signal does not meet the specific condition, the cell will not be awakened. Here, the first signal may carry M bits of information, where M is greater than or equal to 1, and the carried information includes at least one of the following:
amplitude/phase/power/energy and other related information of the signal;
indication information used to wake up the cell.

In this embodiment, the first signal can be received by a dedicated receiver, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

Assuming that the first signal is an OFDM-based OOK signal, which carries N bits of indication information through modulation and the like, where N is greater than or equal to 1, and is used to indicate wake-up of the target cell.

Specifically, the specific condition may be that the amplitude/phase/power/energy of the signal, etc., meets a specific threshold or a specific value or a specific value range.

For example, assuming that the specific condition is that a power value is greater than the power value threshold P0, in case that the base station detects that the power value P of the first signal is greater than the power value threshold P0, the base station determines that the current terminal is within a service range of the base station; otherwise, the base station determines that the current terminal is not within the service range of the base station.

Assuming the specific condition is that an amplitude value is greater than the amplitude threshold A0, in case that the base station detects that the amplitude value A of the first signal is greater than the amplitude threshold A0, the base station determines that the current terminal is within the service range of the base station; otherwise, the base station determines that the current terminal is not within the service range of the base station.

Assuming the specific condition is that an energy value is greater than the energy threshold value E0, in case that the base station detects that the energy value E of the first signal is greater than the energy value threshold value E0, the base station determines that the current terminal is within the service range of the base station; otherwise, the base station determines that the current terminal is not within the service range of the base station.

Assuming that the specific condition is that a phase value is within the phase value range {Θmax, Θmin}, in case that the base station detects that the phase value θ of the first signal is within the phase value range, the base station determines that the current terminal is within the service range of the base station; otherwise, the base station determines that the current terminal is not within the service range of the base station. For example, when transmitting the first signal, the terminal may apply different phase modulations for base stations in different directions, with {0, π} for cells in one direction and {π, 2π} for cells in another direction. The base station performs coherent demodulation on the received signal to obtain the phase value range of the first signal.

Assuming that the specific condition is that the indication information carried by the first signal is a specific value, such as N bits are all 1; in case that the base station detects that the indication information carried by the first signal satisfies the specific value, the base station determines that the current terminal is within the service range of the base station; otherwise, the base station determines that the current terminal is not within the service range of the base station.

When the base station determines that the current terminal is within the service range of the base station, the dormant cell is awakened and transmits an SSB signal, or CSI-RS or a reference signal for positioning to provide regular services to the terminal; otherwise, the dormant cell will not be awakened.

At step 3, in case that the cell is awakened, the cell performs at least one of the following:
resuming service state;
entering a light sleep state;
transmitting SSB/SIB1.

The terminal performs operations such as synchronization, cell search, random access, or scheduling request transmission for the SSB transmitted by the awakened cell.

Second implementation: after receiving the first signal, the base station is triggered to transmit/receive the first object.

As shown in FIG.15, the process includes:
At step 1, the terminal transmits a first signal for surrounding dormant cells/base stations (such as Pico) to discover terminals, where the first signal is an OFDM-based OOK/ASK/FSK/PSK signal. The first signal can be transmitted through a dedicated transmitter or through an NR transmitter. The first signal can be transmitted N times at a specific time point or time period, where N is greater than or equal to 1. The specific transmission occasions can be determined by one or more of the following ways: configured by neighbor cell higher layer signaling, configured by core network signaling, indicated via broadcast signaling, or specified by protocol.

At step 2, the base station performs detection of the first signal and obtains information carried by the first signal, where the information includes signal information and/or carried indication information. In case that the first signal meets a specific condition (i.e., the first condition), the cell is triggered to transmit a specific reference signal, or, in case that the first signal does not meet the specific condition, the cell does not transmit a specific reference signal. Here, the first signal may carry M bits of information, where M is greater than or equal to 1, and the carried information includes at least one of the following:
the signal information carried by the first signal may be related information such as the amplitude/phase/power/energy of the signal;
the indication information carried by the first signal is used to trigger the cell to receive and/or transmit a signal.

In this embodiment, the first signal can be received by a dedicated receiver, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

Specifically, the specific condition may be that the amplitude/phase/power/energy of the signal, etc., meets a specific threshold or a specific value or a specific value range.

For example, assuming that the specific condition is that a power value is greater than the power value threshold P0, if the base station detects that the power value P of the first signal is greater than the power value threshold P0, the base station determines that the current terminal needs the base station side to transmit/receive a specific reference signal; otherwise, the base station determines that the current terminal does not need the base station side to transmit/receive a specific reference signal.

Assuming the specific condition is that an amplitude value is greater than the amplitude threshold value A0, in case that the base station detects that the amplitude value A of the first signal is greater than the amplitude threshold value A0, the base station determines that the current terminal needs the base station side to transmit/receive a specific reference signal; otherwise, the base station determines that the current terminal does not need the base station to transmit/receive a specific reference signal.

Assuming the specific condition is that an energy value is greater than the energy threshold value E0, in case that the base station detects that the energy value E of the first signal is greater than the energy value threshold value E0, the base station determines that the current terminal needs the base station side to transmit/receive a specific reference signal; otherwise, the base station determines that the current terminal does not need the base station to transmit/receive a specific reference signal.

Assuming that the specific condition is that a phase value is within the phase value range {Θmax, Θmin}, in case that the base station detects that the phase value θ of the first signal is within the phase value range, the base station determines that the current terminal needs the base station side to transmit/receive a specific reference signal; otherwise, the base station determines that the current terminal does not need the base station to transmit/receive a specific reference signal.

For example, when the base station determines that the current terminal needs the base station side to transmit/receive a specific reference signal, the dormant cell transmits, according to the protocol definition or according to the indication information carried by the first signal, a specific reference signal, such as SSB signal, TRS signal, CSI-RS signal, reference signal PRS/SRS for positioning, etc.; otherwise, the dormant cell or the cell in energy-saving state will not transmit/receive the specific reference signal. The configuration of the reference signal is a default parameter configuration defined by the protocol. The specific reference signal may be one or more signals defined by the protocol, for example, the protocol defines that when the base station receives the first signal and a specific condition is met, an SSB signal is transmitted. The SSB signal is transmitted at a default period of 20ms. The same is true for other reference signals.

Assuming that the specific condition is that the indication information carried by the first signal is indication information of a specific reference signal, that is, different values correspond to different reference signals, such as: N bits correspond to M reference signals respectively, and the base station triggers transmission and/or reception of the corresponding specific reference signal according to the indication information.

For example, when the base station receives a first signal and the first signal carries indication information of a specific reference signal, for instance, N1 bits in the N bits are used to indicate a positioning reference signal PRS, the base station transmits a PRS signal according to a default parameter configuration or a parameter configuration specified by the protocol. In some embodiments, when the base station determines that the current terminal needs the base station side to transmit/receive a specific reference signal, the dormant cell can configure a parameter in multiple configurations of the specific reference signal according to the indication information. For example, when the indication information carried in the first signal received by the base station indicates transmission of a positioning reference signal PRS and indicates a certain parameter configuration in pre-configured parameter configurations, the base station transmits the specific reference signal according to the specific parameter configuration.

At step 3, in case that the cell is triggered to transmit a specific reference signal, the cell performs at least one of the following:
transmitting an SSB/SIB1
transmitting a downlink synchronization signal TRS
transmitting a positioning reference signal.

The terminal performs operations such as synchronization, cell search, random access, or scheduling request transmission for the SSB transmitted by the awakened cell.

Third implementation: the uplink signal includes a first signal and a second signal; where the first signal carries discovery information, or carries discovery information and trigger information; the second signal carries discovery information and trigger information, or carries trigger information; after transmitting the first response signal, the base station is fully or partially awakened.

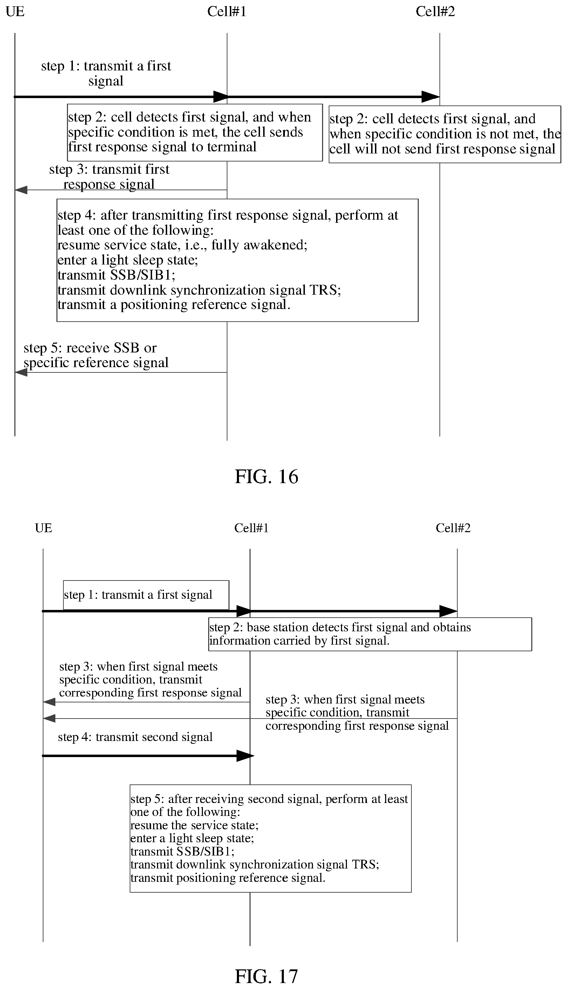

As shown in FIG.16, the process includes:

At step 1, the terminal transmits a first signal for surrounding dormant cells/base stations (such as Pico) to discover terminals, where the first signal is an OFDM-based OOK/ASK/FSK/PSK signal. The first signal can be transmitted through a dedicated transmitter for the first signal or through an NR transmitter.

At step 2, the base station performs detection of the first signal and obtains information carried by the first signal, where the information includes signal information and/or carried indication information. In case that the first signal meets a specific condition (i.e., the first condition), the base station transmit a first response signal to the terminal, or, in case that the first signal does not meet the specific condition, the cell does not transmit the first response signal. Here, the first signal may carry M bits of information, where M is greater than or equal to 1, and the carried information includes at least one of the following:
related information such as the amplitude/phase/power/energy of the signal;
indication information used to trigger the cell to receive and/or transmit a signal.

In this embodiment, the first signal can be received by a dedicated receiver for the first signal, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

By taking the first signal being an OOK-1 signal as an example, the first signal can carry 1 bit of information for terminal discovery in a dormant cell. The first signal can be transmitted N times at a specific time point or time period, where N is greater than or equal to 1. The specific transmission occasions can be determined by one or more of the following ways: configured by neighbor cell higher layer signaling, configured by core network signaling, indicated via broadcast signaling, or specified by protocol.

At step 3, the base station transmits a first response signal for the first signal. Here, the first response signal may be transmitted when the base station detects that the signal information of the first signal meets a specific condition. Specifically, the specific condition may be that the amplitude/phase/power/energy of the signal meets a specific threshold or a specific value or a specific value range. The first response signal may also be transmitted once the base station detects the first signal.

The specific condition can refer to the embodiment 2 and the embodiment 3.

The first response signal may carry at least one of the following items.

A first item: carrying acknowledgment information of the cell for receiving the first signal; such as N-bit ACK information. Here, the first response signal may be an OFDM-based OOK/ASK/FSK/PSK signal.

For example, in case that the base station detects that the amplitude of the signal is higher than a specific threshold value within a certain period of time, the base station determines that a terminal has entered a service range of this cell. Therefore, the base station determines that it needs to be awakened, and then transmits a first response signal to the terminal, such as an OOK signal carrying 1 bit. After transmitting the first signal, the terminal performs reception detection of the first response signal within a specific time gap.

A second item: carrying cell information of the cell. For example, the cell information may be a predefined sequence or signal pattern. Here, the first response signal may be an OFDM-based OOK/ASK/FSK/PSK signal. The predefined sequence or signal pattern corresponding to the cell information may be information pre-configured for the terminal, or defined by a neighboring cell, core network, or protocol.

For example, in case that the base station detects that the amplitude of the signal is higher than a specific threshold value within a certain period of time, the base station determines that a terminal has entered a service range of the cell. Therefore, the base station determines that it needs to be awakened, and then transmits a first response signal to the terminal. The first response signal includes M bits of information corresponding to the pre-configured or pre-defined cell information of the cell. After transmitting the first signal, the terminal performs reception detection of the first response signal within a specific time gap.

A third item: feedback information of the cell to the indication information carried by the first signal, such as feedback information carried by the first signal.

For example, N bits of information of the first signal carries indication information of M1 specific reference signals and/or M2 specific parameter configurations. Then, when the base station detects the first signal and a specific condition is met, the base station transmits, to the terminal, feedback information corresponding to the indication information, that is, acknowledgment information for indication information of an m1-th specific reference signal and/or acknowledgment information for indication information of an m2-th parameter configuration.

A fourth item: reference signal used for terminal to perform time and frequency synchronization, such as an SSB signal.

For example, in case that the base station detects that the amplitude of the signal is higher than a specific threshold value within a certain period of time, the base station determines that a terminal has entered a service range of this cell. Therefore, the base station determines that it needs to be awakened, and then transmits a response signal to the terminal. The first response signal is a specific reference signal, such as an SSB signal used for terminal to perform time-frequency synchronization.

At step 4, after transmitting the first response signal, the specific cell performs at least one of the following:
resuming service state, that is, fully awakened;
entering a light sleep state;
transmitting SSB/SIB1;
transmitting downlink synchronization signal TRS;
transmitting positioning reference signal.

At step 5, after receiving the first response signal, the terminal receives the SSB or specific reference signal, performs synchronization, cell search, random access, or transmits a scheduling request.

Fourth implementation: the uplink signal includes a first signal and a second signal; where the first signal carries discovery information, or carries discovery information and trigger information; the second signal carries discovery information and trigger information, or carries trigger information.

As shown in FIG. 17, the process includes:
at step 1, the terminal transmits a first signal for surrounding dormant cells/base stations (such as Pico) to discover terminals, where the first signal is an OFDM-based OOK/ASK/FSK/PSK signal. The first signal can be transmitted through a dedicated transmitter for the first signal or through an NR transmitter.
at step 2, the base station performs detection of the first signal and obtains information carried by the first signal, where the information includes signal information and/or carried indication information. Here, the information carried by the first signal includes at least one of the following:
the signal information carried by the first signal may be related information such as the amplitude/phase/power/energy of the signal;
the indication information carried by the first signal is used to trigger the cell to receive and/or transmit a signal.

In this embodiment, the first signal can be received by a dedicated receiver for the first signal, and can also be received by an NR receiver.

For example, assuming that the first signal is an OFDM-based OOK signal, when the base station detects the first signal, the base station obtains one of related information such as amplitude/phase/power/energy, for example, obtaining a power value of the signal as P, or obtaining an amplitude value of the signal as A, or obtaining an energy value of the signal as E, or obtaining phase information of the signal as θ.

At step 3, the base station transmits a first response signal for the first signal. Here, the first response signal may be transmitted when the base station detects that the signal information of the first signal meets a specific condition. Specifically, the specific condition may be that the amplitude/phase/power/energy of the signal meets a specific threshold or a specific value or a specific value range. The first response signal may also be transmitted once the base station detects the first signal.

The specific condition can refer to the embodiment 2 and the embodiment 3.

The first response signal may carry at least one of the following items:
a first item: carrying acknowledgment information of the cell for receiving the first signal; such as N-bit ACK information used to indicate that the base station has detected the first signal;
a second item: carrying cell information of the cell; for example, the cell information may be a predefined sequence or signal pattern;
a third item: feedback information of the cell to the indication information carried by the first signal, such as feedback information carried by the first signal;
a fourth item: a specific reference signal (i.e., the second reference signal) transmitted/received by the cell.

For example,
in case that the first signal is used to wake up the dormant cell, the base station transmits a first response signal to confirm that it has been woken up;
in case that the first signal carries relevant information of the cell, the base station transmits a first response signal to feedback whether it is a target cell for waking up by the terminal;
in case that the first signal carries indication information of transmitting/receiving a triggered first target reference signal, the base station performs feedback according to the indication information;
in case that the base station receives the first signal, the base station transmits, to the terminal, a first response signal, which includes acknowledgment information and/or a specific reference signal, such as at least one of an SSB signal and a SIB signal.

At step 4, after receiving the first response signal, the terminal performs operations such as reception, synchronization, cell search, for a specific reference signal (second reference signal), such as SSB. In case that the current cell meets a cell search or cell reselection condition, the terminal transmits a second signal to an accessed specific cell to wake up or trigger transmitting/receiving of a specific reference signal. Here, the second signal can be an OFDM-based OOK/ASK/FSK/PSK signal or an NR signal.

For example,
in case that the second signal is an OFDM-based OOK/ASK/FSK/PSK signal, its generation method and the carried information may refer to the uplink signal in the previous embodiment 6.
in case that the second signal is an NR signal, it can be an uplink control signaling based on PUCCH or an uplink reference signal based on a sequence. The uplink control signaling based on PUCCH is a dedicated signaling for cell wake-up.

The second signal may carry at least one of the following information:
first indication information, such as wake-up cell indication information, used to indicate whether to wake up a dormant cell;
second indication information, such as indication information of transmitting and/or receiving a specific reference signal used to indicate the cell to transmit/receive the specific reference signal;
third indication information, such as cell state indication information used to instruct the target cell to switch between at least one state, or to switch to the second state;
fourth indication information, such as cell identifier related information, used to indicate related cell information for wake-up or transmission/reception of uplink signals/channels;
fifth indication information, such as function trigger indication information, used to instruct a cell to turn on or off a specific function, such as access, measurement, synchronization, positioning, energy saving, and specific service transmission;
sixth indication information, such as a terminal specific identifier, used to indicate a specific type of the terminal or a terminal identity;
seventh indication information, such as terminal demand information related identifier, used to indicate a current service requirement of the terminal, such as access, measurement, synchronization, positioning, energy saving, and specific service transmission requirements.

At step 5, after receiving the second signal for waking up or triggering transmission/reception of a specific reference signal, the specific cell performs at least one of the following:
resuming service state, i.e., being woken up;
entering a light sleep state;
transmitting SSB/SIB1;
transmitting downlink synchronization signal TRS;
transmitting positioning reference signal.

That is, the specific cell is awakened or partially awakened after receiving the second signal, or transmits/receives a specific reference signal, SSB, measures CSI-RS or synchronization signal, etc.

Here, partial awakening means that the base station only transmits and/or receives part of reference signals, or switches to parameter configuration in the energy-saving state, details of which can refer to the embodiment 4.

In one embodiment of the present disclosures, the above OOK/ASK/FSK/PSK signal is a low-power signal different from the OFDM signal, and the processing method of the low-power signal is different from the processing method of the OFDM signal in the related technology, the cell in the sleep state or energy-saving state can process the low-power signal. In this way, the low-power signal enables the terminal to communicate with a dormant cell or a cell in an energy-saving state without synchronization, thereby waking up the dormant cell or triggering the dormant cell to wake up for providing services.

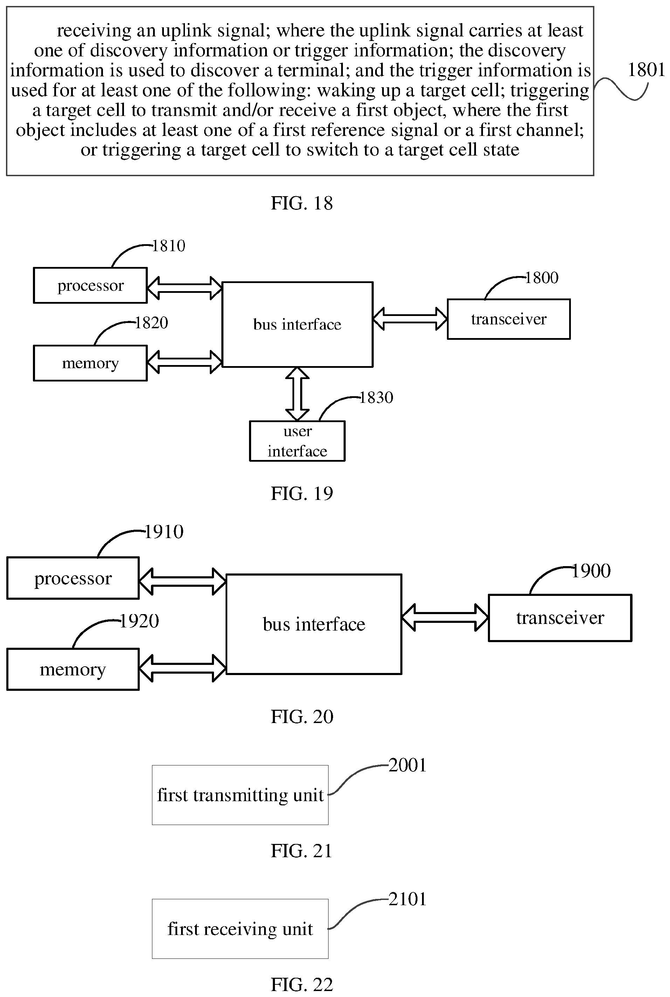

As shown in FIG. 18, one embodiment of the present disclosure further provides a signal transmission method, performed by a network side device. The method includes:
Step 1801: receiving an uplink signal; where the uplink signal carries at least one of discovery information or trigger information.

The discovery information is used to discover a terminal; and the trigger information is used for at least one of the following:
waking up a target cell;
triggering a target cell to transmit and/or receive a first object, where the first object includes at least one of a first reference signal or a first channel; or
triggering a target cell to switch to a target cell state.

In some embodiments, the target cell includes at least one of a dormant cell, a closed cell, a sleeping cell, and an energy-saving cell. The target cell may be a primary serving cell or a secondary cell, and the target cell has a cell identity (ID).

In some embodiments, the above first reference signal includes at least one of the following: primary synchronization signal (PSS), secondary synchronization signal (SSS), synchronization signal/physical broadcast channel signal block (Synchronization Signal Block, SSB), CSI reference signal for tracking (TRS), positioning reference signal (PRS), phase-tracking reference signal (PT-RS), random access preamble, sounding reference signal (SRS), demodulation reference signal (DMRS), or CSI reference signal (CSI-RS).

In some embodiments, the first channel includes at least one of the following: physical uplink control channel (PUCCH), physical downlink control channel (PDCCH), physical broadcast channel (PBCH), physical random access channel (PRACH), physical sidelink shared channel (PSSCH), physical downlink shared channel (PDSCH), or physical uplink shared channel (PUSCH).

In the embodiment of the present disclosure, an uplink signal is received; where the uplink signal carries at least one of discovery information or trigger information, the discovery information is used to discover the terminal, and the trigger information is used for at least one of the following: waking up a target cell, triggering a target cell to transmit and/or receive a first object which includes at least one of a first reference signal or a first channel, or triggering a target cell to switch to a target cell state. In this way, through the above discovery information and/or trigger information, the purpose of waking up a dormant cell or triggering a dormant cell to wake up and provide services can be achieved.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

The above OOK/ASK/FSK/PSK signal is a low-power signal different from the OFDM signal, and the processing method of the low-power signal is different from the processing method of the OFDM signal in the related technology; a dormant cell or a cell in an energy-saving state can process the low-power signal. In this way, the low-power signal enables the terminal to communicate with the dormant cell or the cell in an energy-saving state without synchronization, thereby waking up the dormant cell or triggering the dormant cell to wake up for providing services.

In some embodiments, the modulation signal is a signal based on orthogonal frequency division multiplexing (OFDM).

In case that the modulation signal is an OFDM-based OOK/ASK/FSK/PSK signal, the architecture of the new radio (NR) transceiver in the related art can be used, to further avoid adding new transceivers, thereby simplifying complexity of the transceiver. The detection of OOK/ASK/FSK/PSK modulated signals can be performed via envelope, filtering, or phase detection without requiring an Inverse Fast Fourier Transform (IFFT) operation. This significantly reduces power consumption of a receiving end, thereby achieving an energy-saving effect.

In some embodiments, the uplink signal includes an OFDM-based reference signal or channel.

The OFDM-based reference signal or channel is an OFDM-based reference signal or channel in NR. For example, the reference signal includes at least one of the following: primary synchronization signal (PSS), secondary synchronization signal (SSS), synchronization signal/physical broadcast channel signal block (Synchronization Signal Block, SSB), CSI reference signal for tracking (TRS), positioning reference signal (PRS), phase-tracking reference signal (PT-RS), random access preamble, sounding reference signal (SRS), demodulation reference signal (DMRS), CSI reference signal (CSI-RS). The OFDM-based channel in NR includes at least one of PUCCH, PDCCH, PBCH, PRACH, PSSCH, PDSCH, PUSCH, etc.

In some embodiments, the trigger information includes at least one of the following:
first indication information; where the first indication information is indication information for waking up the target cell;
second indication information; where the second indication information is indication information for triggering the target cell to receive and/or transmit a first object, and the first object includes at least one of a first reference signal or a first channel;
third indication information; where the third indication information is indication information for triggering the target cell to switch to the target cell state;
fourth indication information; where the fourth indication information is used to indicate identifier information of the target cell;
fifth indication information; where the fifth indication information is used to trigger the target cell to turn on and/or turn off a specific function;
sixth indication information; where the sixth indication information is used to indicate a specific identifier of the terminal;
seventh indication information; where the seventh indication information is used to indicate demand information of the terminal.

The trigger information has been described in detail in the method embodiment on the terminal side and will not be repeated here.

In some embodiments, the uplink signal includes a first uplink signal, and the first uplink signal carries the discovery information and trigger information.

In this implementation, the first uplink signal is a modulation signal based on OOK/ASK/FSK/PSK. For example, the first uplink information is used to discover the terminal and wake up the target cell.

Alternatively, in some embodiments, the uplink signal includes a second uplink signal and a third uplink signal, the second uplink signal carries the discovery information, and the third uplink signal carries the trigger information.

In this implementation, the second uplink signal is a modulation signal based on OOK/ASK/FSK/PSK; and the third uplink signal is a modulation signal based on OOK/ASK/FSK/PSK, or an OFDM-based reference signal. For example, the second uplink signal is used to discover the terminal, and the third uplink signal is used to trigger the target cell to transmit and/or receive the first object.

Alternatively, as a third implementation, the uplink signal includes a fourth uplink signal and a fifth uplink signal; the fourth uplink signal is used to carry the discovery information and first trigger information in the trigger information; and the fifth uplink signal is used to carry second trigger information in the trigger information. At least part of the first trigger information is the same as the second trigger information, or the second trigger information is remaining trigger information in the trigger information except the first trigger information in the trigger information.

In this implementation, the first trigger information and the second trigger information are complementary trigger information or at least partially overlapping trigger information. For example, the fourth uplink signal is used to discover the terminal and trigger the target cell to transmit and/or receive the first object, and the fifth uplink signal is used to wake up the target cell or trigger the target cell to switch to the target cell state. The fourth uplink signal is a modulation signal based on OOK/ASK/FSK/PSK; and the fifth uplink signal is a modulation signal based on OOK/ASK/FSK/PSK, or is an OFDM-based reference signal.

Alternatively, as a fourth implementation, the trigger signal includes a sixth uplink signal and a seventh uplink signal. The sixth uplink signal is used to carry first discovery information in the discovery information and third trigger information in the trigger information. The seventh uplink signal is used to carry second discovery information in the discovery information and fourth trigger information in the trigger information. The first discovery information is the same as or different from the second discovery information. The third trigger information is at least partially identical to the fourth trigger information, or, the fourth trigger information is trigger information in the trigger information except for the third trigger information in the trigger information.

In some embodiments, the first discovery information includes at least part information in the discovery information, and the second discovery information includes at least part information in the discovery information.

In this implementation, the third trigger information and the fourth trigger information are complementary trigger information or at least partially overlapping trigger information. For example, the fourth uplink signal is used to discover the terminal and trigger the target cell to transmit and/or receive the first object, and the fifth uplink signal is used to discover the terminal and wake up the target cell. The sixth uplink signal is a modulation signal based on OOK/ASK/FSK/PSK, and the seventh uplink signal is a modulation signal based on OOK/ASK/FSK/PSK.

In some embodiments, the method of the present disclosure further includes:
transmitting a response signal for the uplink signal;
where the response signal carries at least one of the following:
acknowledgment information of the first signal;
feedback information of the first signal;
a second reference signal and/or second channel;
cell information of a cell that transmits the response signal; or,
specific cell information.

In some embodiments, the transmitting a response signal for the uplink signal, includes:
in case that signal information of the uplink signal meets a first condition, transmitting the response signal for the uplink signal.

The signal information includes at least one of amplitude, frequency, carrier, bandwidth, phase, power and energy of the uplink signal.

In some embodiments, the method of the present disclosure further includes:
in case that the signal information of the uplink signal meets the first condition, performing at least one of the following:
discovering a terminal; waking up a target cell; triggering the target cell to transmit or receive a first object; triggering the target cell to switch to a target cell state.

The signal information includes at least one of amplitude, frequency, carrier, bandwidth, phase, power and energy of the uplink signal.

In some embodiments, the method of the present disclosure further includes:
at a second moment, transmitting and/or receiving a third object;
where the second moment includes at least one of the following:
   a moment that is offset by a third duration from a reception time of the uplink signal; or
   a moment that is offset by a fourth duration from a transmission time of a response signal to the uplink signal.

The third object includes at least one of the following:
synchronization signal/physical broadcast channel signal block SSB or system information block SIB1 transmitted by a target cell indicated by the trigger information;
at least one of a reference signal, a control channel, and a data channel transmitted by a target cell indicated by the trigger information;
at least one of a first reference signal or a first channel indicated by the trigger information;
at least one of a reference signal, a control channel, or a data channel corresponding to a specific function indicated by the trigger information;
at least one of a reference signal, a control channel, or a data channel corresponding to terminal requirement information indicated by the trigger information;
at least one of a reference signal, a control channel, and a data channel corresponding to a target cell state indicated by the trigger information;
at least one of a reference signal, a control channel or a data channel under default parameter configuration;
at least one of a reference signal, a control channel or a data channel under parameter configuration carried by a broadcast channel or broadcast message of an access cell;
a second reference signal and/or a second channel indicated by the response signal.

In some embodiments, the trigger information includes N bits of information, where N is an integer greater than or equal to 0.

The N bits of information of the trigger information are used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information is used to indicate at least one indication information in the trigger information, where N1 is an integer greater than or equal to 1, and N1 is less than or equal to N.

In some embodiments, the first indication information includes at least one of indication information of whether to wake up a target cell and indication information of a target cell to be woken up;
and/or, the first indication information includes A1 bits of information and a value and/or sequence corresponding to the A1 bits of information is used to indicate whether to wake up a target cell and/or indicate a target cell to be woken up, where A1 is an integer greater than or equal to 0.

In some embodiments, the second indication information includes at least one of indication information of whether to transmit and/or receive a first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining a target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell ID, and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal and terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

It is to be noted that the method performed by the network device is a method corresponding to the above method performed by the terminal, and the specific interaction process between the two has been described in detail in the embodiment on the terminal side, which will not be repeated here.

As shown in FIG. 19, one embodiment of the present disclosure provides a signal transmission apparatus, which is applied to a terminal and includes a memory 1820, a transceiver 1800, and a processor 1810.

The memory 1820 is used to store a computer program. The transceiver 1800 is used to send and receive data under the control of the processor 1810. The processor 1810 is used to read the computer program in the memory 1820 and perform the following operations:
transmitting an uplink signal, where the uplink signal carries at least one of discovery information or trigger information.

The discovery information is used to discover the terminal; and the trigger information is used for at least one of the following:
waking up a target cell;
triggering a target cell to transmit and/or receive a first object, where the first object includes at least one of a first reference signal and a first channel; or
triggering a target cell to switch to a target cell state.

In FIG. 19, the bus architecture may include any number of interconnected buses and bridges, specifically linking various circuits represented by the processor 1810 and the memory 1820. The bus architecture may also link various other circuits such as peripheral devices, voltage regulators, and power management circuits, which are well-known in the art and therefore will not be further described herein. The bus interface provides an interface. The transceiver 1800 may include multiple elements, including a transmitter and a receiver, providing units for communicating with various other devices over transmission media, where these transmission media include wireless channels, wired channels, optical fibers, etc. For different user equipment, the user interface 1830 may also be an interface capable of connecting external or internal devices, where the connected devices include but are not limited to a keypad, display, speaker, microphone, joystick, etc.

The processor 1810 is responsible for managing the bus architecture and general processing, and the memory 1820 may store data used by the processor 1810 when performing operations.

In some embodiments, the processor 1810 may be a Central Processing Unit (CPU), Application Specific Integrated Circuit (ASIC), Field-Programmable Gate Array (FPGA), or Complex Programmable Logic Device (CPLD). The processor may also adopt a multi-core architecture.

The processor executes the method provided by any embodiment of the present disclosure by calling computer programs stored in the memory according to obtained executable instructions. The processor and the memory may also be physically separated.

In some embodiments, the processor further performs the following steps: the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the discovery information includes at least one of amplitude, frequency, carrier, bandwidth, phase, power and energy of a signal used for signal detection.

In some embodiments, the trigger information includes at least one of the following:
first indication information; where the first indication information is indication information for waking up the target cell;
second indication information; where the second indication information is indication information for triggering the target cell to receive and/or transmit a first object, and the first object includes at least one of a first reference signal or a first channel;
third indication information; where the third indication information is indication information for triggering the target cell to switch to the target cell state;
fourth indication information; where the fourth indication information is used to indicate identifier information of the target cell;
fifth indication information; where the fifth indication information is used to trigger the target cell to turn on and/or turn off a specific function;
sixth indication information; where the sixth indication information is used to indicate a specific identifier of the terminal;
seventh indication information; where the seventh indication information is used to indicate demand information of the terminal.

In some embodiments, at least one indication information in the trigger information is indicated in an explicit or implicit manner.

In some embodiments, the trigger information includes N bits of information, where N is an integer greater than or equal to 0.

The N bits of information of the trigger information is used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information is used to indicate at least one indication information in the trigger information, where N1 is an integer greater than or equal to 1, and N1 is less than or equal to N.

In some embodiments, the first indication information includes at least one of indication information of whether to wake up a target cell and indication information of a target cell to be woken up;
and/or, the first indication information includes A1 bits of information and a value and/or sequence corresponding to the A1 bits of information is used to indicate whether to wake up a target cell and/or indicate a target cell to be woken up, where A1 is an integer greater than or equal to 0.

In some embodiments, the second indication information includes at least one of indication information of whether to transmit and/or receive a first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining a target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell ID, and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal and terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

In some embodiments, the uplink signal includes a first uplink signal, and the first uplink signal carries the discovery information and trigger information.

Alternatively, the uplink signal includes a second uplink signal and a third uplink signal, the second uplink signal carries the discovery information, and the third uplink signal carries the trigger information;
Alternatively, the uplink signal includes a fourth uplink signal and a fifth uplink signal; the fourth uplink signal is used to carry the discovery information and first trigger information in the trigger information; and the fifth uplink signal is used to carry second trigger information in the trigger information. At least part of the first trigger information is the same as the second trigger information, or the second trigger information is remaining trigger information in the trigger information except the first trigger information in the trigger information.

Alternatively, the trigger signal includes a sixth uplink signal and a seventh uplink signal. The sixth uplink signal is used to carry first discovery information in the discovery information and third trigger information in the trigger information. The seventh uplink signal is used to carry second discovery information in the discovery information and fourth trigger information in the trigger information. The first discovery information is the same as or different from the second discovery information. The third trigger information is at least partially identical to the fourth trigger information, or, the fourth trigger information is trigger information in the trigger information except for the third trigger information in the trigger information.

In some embodiments, the processor further performs the following steps: obtaining resource related information of the uplink signal; where the resource related information is used to generate the uplink signal and/or to determine a transmitting resource location of the uplink signal.

The resource related information is obtained based on at least one of resource information stored in the terminal, resource information configured by neighboring cell high layer signaling, resource information configured by core network signaling, resource information transmitted by broadcast signaling, or resource information defined by the protocol.

In some embodiments, the resource related information of the uplink signal includes at least one of the following:
generation related information of the uplink signal; or
resource location information of the uplink signal.

The generation related information includes at least one of a transmission frequency, the number of frequency domain units, patterns occupied by the frequency domain units, a time domain reference point, the number of time domain units occupied, the number of segments of the uplink signal, the number of points of the inverse fast Fourier transform IFFT, a sequence length of the uplink signal, a sequence length of at least one indication information in the uplink signal, or the number of at least one indication information in the uplink signal.

The resource location information includes at least one of time domain resource occasion information, frequency domain resource location information or spatial domain resource location information.

In some embodiments, the time domain resource occasion information includes at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

In some embodiments, the frequency domain resource information of the uplink signal includes at least one of the following: a subcarrier where the uplink signal is located; a bandwidth part BWP where the uplink signal is located; a transmission pattern of the uplink signal in the frequency domain.

In some embodiments, the spatial resource location information of the uplink signal includes beam-related information of the uplink signal.

In some embodiments, the processor further performs the following steps: obtaining a response signal for the uplink signal;
where the response signal carries at least one of the following:
acknowledgment information of the first signal;
feedback information of the first signal;
a second reference signal and/or second channel;
cell information of a cell that transmits the response signal; or,
specific cell information.

In some embodiments, the processor further performs the following steps: at a first moment, transmitting and/or receiving a second object of the target cell;
where the first moment includes at least one of the following:
a moment that is offset by a first duration from a transmission time of the uplink signal; or
a moment that is offset by a second duration from a reception time of a first response signal for the uplink signal.

The target cell includes at least one of the following:
at least one cell indicated by the trigger information;
at least one cell that transmits the response signal;
at least one cell indicated by the response signal;
a cell accessed by the terminal.

The second object includes at least one of the following:
synchronization signal/physical broadcast channel signal block (SSB) or system information block (SIB1) transmitted by the target cell;
at least one of a reference signal or a channel transmitted by the target cell;
at least one of a first reference signal or a first channel indicated by the trigger information;
at least one of a reference signal or a channel corresponding to a specific function indicated by the trigger information;
at least one of a reference signal or a channel corresponding to terminal requirement information indicated by the trigger information;
at least one of a reference signal and a channel corresponding to a target cell state indicated by the trigger information;
at least one of a reference signal or a channel under default parameter configuration;
at least one of a reference signal or a channel under parameter configuration carried by a broadcast channel or broadcast message of an access cell;
a second reference signal and/or a second channel indicated by the response signal.

It is to be noted here that the above apparatus provided in the embodiment of the present disclosure can implement all the method steps implemented in the above method embodiment applied to the terminal, and can achieve the same technical effect. The parts and beneficial effects of this embodiment that are the same as the method embodiment will not be described in detail here.

As shown in FIG. 20, one embodiment of the present disclosure further provides a signal transmission apparatus, which includes a memory 1920, a transceiver 1900, and a processor 1910.

The memory 1920 is used to store a computer program. The transceiver 1900 is used to send and receive data under the control of the processor. The processor 1910 is used to read the computer program in the memory and perform the following operations:
receiving an uplink signal; where the uplink signal carries at least one of discovery information or trigger information.

The discovery information is used to discover a terminal; and the trigger information is used for at least one of the following:
waking up a target cell;
triggering a target cell to transmit and/or receive a first object, where the first object includes at least one of a first reference signal or a first channel; or
triggering a target cell to switch to a target cell state.

In FIG. 20, a bus architecture may include any number of interconnected bus and bridge. Specifically, various circuits of one or more processors, which are represented by the processor 1910, and one or more memories, which are represented by the memory 1920, are linked together. The bus architecture may link various other circuits, such as a peripheral device, voltage regulator and a power management circuit together. These features are well known in this field; therefore, this disclosure does not make further description on these features. The bus interface provides an interface. The transceiver 1900 may be multiple elements, including a transmitter and a receiver and provide units, which communicate with other devices on the transmission medium. The transmission medium includes radio channels, wired channels, optical cables, etc. The processor 1910 is responsible for managing the bus architecture and the normal processing. The memory 1920 may be used to store data used by the processor 1910 for performing operations.

The processor 1910 may be a central processing unit (CPU), an application specific integrated circuit (ASIC), a field-programmable gate array (FPGA) or a complex programmable logic device (CPLD). The processor may also adopt multi-core architecture.

It is to be noted that the above apparatus provided in this embodiment of the present disclosure can implement all the method steps of the above information processing method embodiment applied to the network device, and can achieve the same technical effect. The parts and beneficial effects of this embodiment that are the same as the method embodiment will not be described in detail here.

As shown in FIG. 21, one embodiment of the present disclosure further provides a signal transmission apparatus, including:
a first transmitting unit 2001 used to transmit an uplink signal, where the uplink signal carries at least one of discovery information or trigger information.

The discovery information is used to discover the terminal; and the trigger information is used for at least one of the following:
waking up a target cell;
triggering a target cell to transmit and/or receive a first object, where the first object includes at least one of a first reference signal and a first channel; or
triggering a target cell to switch to a target cell state.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the discovery information includes at least one of amplitude, frequency, carrier, bandwidth, phase, power and energy of a signal used for signal detection.

In some embodiments, the trigger information includes at least one of the following:
first indication information; where the first indication information is indication information for waking up the target cell;
second indication information; where the second indication information is indication information for triggering the target cell to receive and/or transmit a first object, and the first object includes at least one of a first reference signal or a first channel;
third indication information; where the third indication information is indication information for triggering the target cell to switch to the target cell state;
fourth indication information; where the fourth indication information is used to indicate identifier information of the target cell;
fifth indication information; where the fifth indication information is used to trigger the target cell to turn on and/or turn off a specific function;
sixth indication information; where the sixth indication information is used to indicate a specific identifier of the terminal;
seventh indication information; where the seventh indication information is used to indicate demand information of the terminal.

In some embodiments, at least one indication information in the trigger information is indicated in an explicit or implicit manner.

In some embodiments, the trigger information includes N bits of information, where N is an integer greater than or equal to 0.

The N bits of information of the trigger information is used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information is used to indicate at least one indication information in the trigger information, where N1 is an integer greater than or equal to 1, and N1 is less than or equal to N.

In some embodiments, the first indication information includes at least one of indication information of whether to wake up a target cell and indication information of a target cell to be woken up;
and/or, the first indication information includes A1 bits of information and a value and/or sequence corresponding to the A1 bits of information is used to indicate whether to wake up a target cell and/or indicate a target cell to be woken up, where A1 is an integer greater than or equal to 0.

In some embodiments, the second indication information includes at least one of indication information of whether to transmit and/or receive a first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining a target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell ID, and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal and terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

In some embodiments, the uplink signal includes a first uplink signal, and the first uplink signal carries the discovery information and trigger information.

Alternatively, the uplink signal includes a second uplink signal and a third uplink signal, the second uplink signal carries the discovery information, and the third uplink signal carries the trigger information;
Alternatively, the uplink signal includes a fourth uplink signal and a fifth uplink signal; the fourth uplink signal is used to carry the discovery information and first trigger information in the trigger information; and the fifth uplink signal is used to carry second trigger information in the trigger information. At least part of the first trigger information is the same as the second trigger information, or the second trigger information is remaining trigger information in the trigger information except the first trigger information in the trigger information.

Alternatively, the trigger signal includes a sixth uplink signal and a seventh uplink signal. The sixth uplink signal is used to carry first discovery information in the discovery information and third trigger information in the trigger information. The seventh uplink signal is used to carry second discovery information in the discovery information and fourth trigger information in the trigger information. The first discovery information is the same as or different from the second discovery information. The third trigger information is at least partially identical to the fourth trigger information, or, the fourth trigger information is trigger information in the trigger information except for the third trigger information in the trigger information.

In some embodiments, the apparatus of the embodiments of the present disclosure further includes:
a first obtaining unit used to obtain resource related information of the uplink signal; where the resource related information is used to generate the uplink signal and/or to determine a transmitting resource location of the uplink signal.

The resource related information is obtained based on at least one of resource information stored in the terminal, resource information configured by neighboring cell high layer signaling, resource information configured by core network signaling, resource information transmitted by broadcast signaling, or resource information defined by the protocol.

In some embodiments, the resource related information of the uplink signal includes at least one of the following:
generation related information of the uplink signal; or
resource location information of the uplink signal.

The generation related information includes at least one of a transmission frequency, the number of frequency domain units, patterns occupied by the frequency domain units, a time domain reference point, the number of time domain units occupied, the number of segments of the uplink signal, the number of points of the inverse fast Fourier transform IFFT, a sequence length of the uplink signal, a sequence length of at least one indication information in the uplink signal, or the number of at least one indication information in the uplink signal.

The resource location information includes at least one of time domain resource occasion information, frequency domain resource location information or spatial domain resource location information.

In some embodiments, the time domain resource occasion information includes at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

In some embodiments, the frequency domain resource information of the uplink signal includes at least one of the following: a subcarrier where the uplink signal is located; a bandwidth part BWP where the uplink signal is located; a transmission pattern of the uplink signal in the frequency domain.

In some embodiments, the spatial resource location information of the uplink signal includes beam-related information of the uplink signal.

In some embodiments, the apparatus of the embodiments of the present disclosure further includes:
a second obtaining unit used to obtain a response signal for the uplink signal;
where the response signal carries at least one of the following:
acknowledgment information of the first signal;
feedback information of the first signal;
a second reference signal and/or second channel;
cell information of a cell that transmits the response signal; or,
specific cell information.

In some embodiments, the apparatus of the embodiments of the present disclosure further includes:
a first processing unit used to, at a first moment, transmit and/or receive a second object of the target cell;
where the first moment includes at least one of the following:
a moment that is offset by a first duration from a transmission time of the uplink signal; or
a moment that is offset by a second duration from a reception time of a first response signal for the uplink signal.

The target cell includes at least one of the following:
at least one cell indicated by the trigger information;
at least one cell that transmits the response signal;
at least one cell indicated by the response signal;
a cell accessed by the terminal.

The second object includes at least one of the following:
synchronization signal/physical broadcast channel signal block (SSB) or system information block (SIB1) transmitted by the target cell;
at least one of a reference signal or a channel transmitted by the target cell;
at least one of a first reference signal or a first channel indicated by the trigger information;
at least one of a reference signal or a channel corresponding to a specific function indicated by the trigger information;
at least one of a reference signal or a channel corresponding to terminal requirement information indicated by the trigger information;
at least one of a reference signal and a channel corresponding to a target cell state indicated by the trigger information;
at least one of a reference signal or a channel under default parameter configuration;
at least one of a reference signal or a channel under parameter configuration carried by a broadcast channel or broadcast message of an access cell;
a second reference signal and/or a second channel indicated by the response signal.

It is to be noted here that the above apparatus provided in the embodiment of the present disclosure can implement all the method steps implemented in the above method embodiment applied to the terminal, and can achieve the same technical effect. The parts and beneficial effects of this embodiment that are the same as the method embodiment will not be described in detail here.

As shown in FIG. 22, one embodiment of the present disclosure further provides a signal transmission apparatus, including:
a first receiving unit 2101 used to receive an uplink signal; where the uplink signal carries at least one of discovery information or trigger information.

The discovery information is used to discover a terminal; and the trigger information is used for at least one of the following:
waking up a target cell;
triggering a target cell to transmit and/or receive a first object, where the first object includes at least one of a first reference signal or a first channel; or
triggering a target cell to switch to a target cell state.

In some embodiments, the uplink signal includes a modulation signal, and the modulation signal includes at least one of an on-off keying (OOK) signal; an amplitude shift keying (ASK) signal; a frequency shift keying (FSK) signal; or a phase shift keying (PSK) signal.

In some embodiments, the modulation signal is a signal based on orthogonal frequency division multiplexing (OFDM).

In some embodiments, the uplink signal includes an OFDM-based reference signal or channel.

In some embodiments, the trigger information includes at least one of the following:
first indication information; where the first indication information is indication information for waking up the target cell;
second indication information; where the second indication information is indication information for triggering the target cell to receive and/or transmit a first object, and the first object includes at least one of a first reference signal or a first channel;
third indication information; where the third indication information is indication information for triggering the target cell to switch to the target cell state;
fourth indication information; where the fourth indication information is used to indicate identifier information of the target cell;
fifth indication information; where the fifth indication information is used to trigger the target cell to turn on and/or turn off a specific function;
sixth indication information; where the sixth indication information is used to indicate a specific identifier of the terminal;
seventh indication information; where the seventh indication information is used to indicate demand information of the terminal.

In some embodiments, the uplink signal includes a first uplink signal, and the first uplink signal carries the discovery information and trigger information.

Alternatively, the uplink signal includes a second uplink signal and a third uplink signal, the second uplink signal carries the discovery information, and the third uplink signal carries the trigger information;
Alternatively, the uplink signal includes a fourth uplink signal and a fifth uplink signal; the fourth uplink signal is used to carry the discovery information and first trigger information in the trigger information; and the fifth uplink signal is used to carry second trigger information in the trigger information. At least part of the first trigger information is the same as the second trigger information, or the second trigger information is remaining trigger information in the trigger information except the first trigger information in the trigger information.

Alternatively, the trigger signal includes a sixth uplink signal and a seventh uplink signal. The sixth uplink signal is used to carry first discovery information in the discovery information and third trigger information in the trigger information. The seventh uplink signal is used to carry second discovery information in the discovery information and fourth trigger information in the trigger information. The first discovery information is the same as or different from the second discovery information. The third trigger information is at least partially identical to the fourth trigger information, or, the fourth trigger information is trigger information in the trigger information except for the third trigger information in the trigger information.

In some embodiments, the apparatus of the embodiments of the present disclosure further includes:
a second transmitting unit used to transmit a response signal to the uplink signal;
where the response signal carries at least one of the following:
acknowledgment information of the first signal;
feedback information of the first signal;
a second reference signal and/or second channel;
cell information of a cell that transmits the response signal; or,
specific cell information.

In some embodiments, the second transmitting unit is used to, in case that signal information of the uplink signal meets a first condition, transmit the response signal for the uplink signal. The signal information includes at least one of amplitude, frequency, carrier, bandwidth, phase, power and energy of the uplink signal.

In some embodiments, the apparatus of the embodiments of the present disclosure further includes:
a second processing unit used to, in case that the signal information of the uplink signal meets the first condition, perform at least one of the following:
discovering a terminal; waking up a target cell; triggering the target cell to transmit or receive a first object; triggering the target cell to switch to a target cell state.

The signal information includes at least one of amplitude, frequency, carrier, bandwidth, phase, power and energy of the uplink signal.

In some embodiments, the apparatus of the embodiments of the present disclosure further includes:
a third processing unit used to, at a second moment, transmit and/or receive a third object;
where the second moment includes at least one of the following:
   a moment that is offset by a third duration from a reception time of the uplink signal; or
   a moment that is offset by a fourth duration from a transmission time of a response signal to the uplink signal.

The third object includes at least one of the following:
synchronization signal/physical broadcast channel signal block SSB or system information block SIB1 transmitted by a target cell indicated by the trigger information;
at least one of a reference signal, a control channel, and a data channel transmitted by a target cell indicated by the trigger information;
at least one of a first reference signal or a first channel indicated by the trigger information;
at least one of a reference signal, a control channel, or a data channel corresponding to a specific function indicated by the trigger information;
at least one of a reference signal, a control channel, or a data channel corresponding to terminal requirement information indicated by the trigger information;
at least one of a reference signal, a control channel, and a data channel corresponding to a target cell state indicated by the trigger information;
at least one of a reference signal, a control channel or a data channel under default parameter configuration;
at least one of a reference signal, a control channel or a data channel under parameter configuration carried by a broadcast channel or broadcast message of an access cell;
a second reference signal and/or a second channel indicated by the response signal.

In some embodiments, the trigger information includes N bits of information, where N is an integer greater than or equal to 0.

The N bits of information of the trigger information is used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information is used to indicate at least one indication information in the trigger information, where N1 is an integer greater than or equal to 1, and N1 is less than or equal to N.

In some embodiments, the first indication information includes at least one of indication information of whether to wake up a target cell and indication information of a target cell to be woken up;
and/or, the first indication information includes A1 bits of information and a value and/or sequence corresponding to the A1 bits of information is used to indicate whether to wake up a target cell and/or indicate a target cell to be woken up, where A1 is an integer greater than or equal to 0.

In some embodiments, the second indication information includes at least one of indication information of whether to transmit and/or receive a first object, or indication information of transmitting and/or receiving the first object;
and/or, the second indication information includes A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

In some embodiments, the third indication information includes at least one of indication information indicating whether the target cell is switched between at least one cell state, and indication information indicating for switching to or maintaining a target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

In some embodiments, the fourth indication information includes at least one of an index of a cell in a frequency list, an index in a cell list, a cell identifier, a cell ID, and a bit map of at least one cell.

In some embodiments, the fifth indication information includes at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

In some embodiments, the sixth indication information includes at least one of a specific type of the terminal and terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

In some embodiments, the seventh indication information includes at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

It is to be noted here that the above apparatus provided in the embodiment of the present disclosure can implement all the method steps implemented in the above method embodiment applied to the terminal, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

In some embodiments of the present disclosure, a processor-readable storage medium is further provided. The processor-readable storage medium stores program instructions, and the program instructions are used to enable a processor to execute all the steps of the method embodiment executed by the above terminal or all the steps of the method embodiment executed by the network device, and can achieve the same technical effect. The parts and beneficial effects of this embodiment that are the same as the method embodiment will not be described in detail here.

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device (network side device) involved in the embodiment of the present disclosure may be a base station. The base station may include one or more cells providing services for the terminal. Depending on different application scenarios, the base station is called as an access point, a device in an access network in communication with the wireless terminal device through one or more sectors on an air interface, and may also be called other names. The network device may be used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network architectures, the network device may include a Centralized Unit (CU) node and a Distributed Unit (DU) node, and the centralized unit and distributed unit may also be geographically separated.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A signal transmission method, performed by a terminal, comprising:
transmitting an uplink signal; wherein the uplink signal carries at least one of discovery information or trigger information;
wherein the discovery information is used to discover the terminal; and the trigger information is used for at least one of the following:
waking up a target cell;
triggering a target cell to transmit and/or receive a first object; wherein the first object includes at least one of a first reference signal or a first channel; or
triggering a target cell to switch to a target cell state.

2. The method according to claim 1, wherein the uplink signal comprises a modulation signal, and the modulation signal includes at least one of an on-off keying (OOK) signal; an amplitude shift keying (ASK) signal; a frequency shift keying (FSK) signal; or a phase shift keying (PSK) signal.

3. The method according to claim 2, wherein the modulation signal is a signal based on orthogonal frequency division multiplexing (OFDM).

4. The method according to claim 1, wherein the uplink signal comprises an OFDM-based reference signal or channel.

5. The method according to claim 1, wherein the discovery information comprises at least one of amplitude, frequency, carrier, bandwidth, phase, power or energy of a signal used for signal detection.

6. The method according to claim 1, wherein the trigger information comprises at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

7. The method according to claim 6, wherein at least one piece of indication information in the trigger information is indicated in an implicit manner.

8. The method according to claim 6, wherein the trigger information comprises N bits of information, wherein N is an integer greater than or equal to 0;
wherein the N bits of information of the trigger information are used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

9. The method according to claim 6, wherein the first indication information comprises at least one of indication information of whether to wake up the target cell or indication information of the target cell to be woken up;
and/or, the first indication information comprises A1 bits of information and a value and/or sequence corresponding to the A1 bits of information is used to indicate whether to wake up the target cell and/or indicate the target cell to be woken up, where A1 is an integer greater than or equal to 0.

10. The method according to claim 6, wherein the second indication information comprises at least one of indication information of whether to transmit and/or receive the first object, or indication information of transmitting and/or receiving the first object;
and/or, the second indication information comprises A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

11. The method according to claim 6, wherein the third indication information comprises at least one of indication information indicating whether the target cell is switched between at least one cell state, or indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

12. The method according to claim 6, wherein the fourth indication information comprises at least one of an index of a cell in a frequency list, an index in a cell list, a cell identifier, a cell identify (ID), or a bit map of at least one cell.

13. The method according to claim 6, wherein the fifth indication information comprises at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

14. The method according to claim 6, wherein the sixth indication information comprises at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

15. The method according to claim 6, wherein the seventh indication information comprises at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

16. The method according to claim 1, wherein the uplink signal comprises a first uplink signal, and the first uplink signal carries the discovery information and the trigger information;
or, the uplink signal comprises a second uplink signal and a third uplink signal, the second uplink signal carries the discovery information, and the third uplink signal carries the trigger information;
or, the uplink signal comprises a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal comprises a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

17. The method according to claim 1, further comprising:
obtaining resource related information of the uplink signal; wherein the resource related information is used to generate the uplink signal and/or to determine a transmitting resource location of the uplink signal;
wherein the resource related information is obtained based on at least one of resource information stored in the terminal, resource information configured by neighboring cell high layer signaling, resource information configured by core network signaling, resource information transmitted by broadcast signaling, or resource information defined by the protocol.

18. The method according to claim 17, wherein the resource related information of the uplink signal comprises at least one of the following:
generation related information of the uplink signal; or
resource location information of the uplink signal;
wherein the generation related information comprises at least one of a transmission frequency, the number of frequency domain units, patterns occupied by the frequency domain units, a time domain reference point, the number of time domain units occupied, the number of segments of the uplink signal, the number of points of inverse fast Fourier transform (IFFT), a sequence length of the uplink signal, a sequence length of at least one indication information in the uplink signal, or the number of at least one indication information in the uplink signal;
wherein the resource location information comprises at least one of time domain resource occasion information, frequency domain resource location information or spatial domain resource location information.

19. The method according to claim 18, wherein the time domain resource occasion information comprises at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

20. The method according to claim 18, wherein the frequency domain resource information of the uplink signal comprises at least one of the following: a subcarrier where the uplink signal is located; a bandwidth part BWP where the uplink signal is located, or a transmission pattern of the uplink signal in the frequency domain.

21. The method according to claim 18, wherein the spatial resource location information of the uplink signal comprises beam-related information of the uplink signal.

22. The method according to claim 1, further comprising:
obtaining a response signal for the uplink signal;
wherein the response signal carries at least one of the following:
acknowledgment information of the first signal;
feedback information of the first signal;
a second reference signal and/or second channel;
cell information of a cell that transmits the response signal; or,
specific cell information.

23. The method according to claim 1 or 22, further comprising:
at a first moment, transmitting and/or receiving a second object of the target cell;
wherein the first moment comprises at least one of the following:
a moment that is offset by a first duration from a transmission time of the uplink signal; or
a moment that is offset by a second duration from a reception time of a response signal for the first signal;
wherein the target cell comprises at least one of the following:
at least one cell indicated by the trigger information;
at least one cell that transmits the response signal;
at least one cell indicated by the response signal; or
a cell accessed by the terminal;
wherein the second object comprises at least one of the following:
synchronization signal/physical broadcast channel signal block (SSB) or system information block (SIB1) transmitted by the target cell;
at least one of a reference signal or a channel transmitted by the target cell;
at least one of a first reference signal or a first channel indicated by the trigger information;
at least one of a reference signal or a channel corresponding to a specific function indicated by the trigger information;
at least one of a reference signal or a channel corresponding to terminal requirement information indicated by the trigger information;
at least one of a reference signal and a channel corresponding to a target cell state indicated by the trigger information;
at least one of a reference signal or a channel under default parameter configuration;
at least one of a reference signal or a channel under parameter configuration carried by a broadcast channel or broadcast message of an access cell; or
a second reference signal and/or a second channel indicated by the response signal.

24. A signal transmission method, performed by a network side device, comprising:
receiving an uplink signal; wherein the uplink signal carries at least one of discovery information or trigger information;
wherein the discovery information is used to discover a terminal; and the trigger information is used for at least one of the following:
waking up a target cell;
triggering a target cell to transmit and/or receive a first object; wherein the first object includes at least one of a first reference signal or a first channel; or
triggering a target cell to switch to a target cell state.

25. The method according to claim 24, wherein the uplink signal comprises a modulation signal, and the modulation signal includes at least one of an on-off keying (OOK) signal; an amplitude shift keying (ASK) signal; a frequency shift keying (FSK) signal; or a phase shift keying (PSK) signal.

26. The method according to claim 25, wherein the modulation signal is a signal based on orthogonal frequency division multiplexing (OFDM).

27. The method according to claim 24, wherein the uplink signal comprises an OFDM-based reference signal or channel.

28. The method according to claim 24, wherein the trigger information comprises at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

29. The method according to claim 24, wherein the uplink signal comprises a first uplink signal, and the first uplink signal carries the discovery information and the trigger information;
or, the uplink signal comprises a second uplink signal and a third uplink signal, the second uplink signal carries the discovery information, and the third uplink signal carries the trigger information;
or, the uplink signal comprises a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal comprises a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

30. The method according to claim 24, further comprising:
transmitting a response signal for the uplink signal;
wherein the response signal carries at least one of the following:
acknowledgment information of the first signal;
feedback information of the first signal;
a second reference signal and/or second channel;
cell information of a cell that transmits the response signal; or,
specific cell information.

31. The method according to claim 30, wherein the transmitting a response signal for the uplink signal, comprises:
in case that signal information of the uplink signal meets a first condition, transmitting the response signal for the uplink signal;
wherein the signal information comprises at least one of amplitude, frequency, carrier, bandwidth, phase, power or energy of the uplink signal.

32. The method according to claim 24, further comprising:
in case that signal information of the uplink signal meets a first condition, performing at least one of the following:
discovering the terminal; waking up the target cell; triggering the target cell to transmit or receive the first object; or triggering the target cell to switch to the target cell state;
wherein the signal information comprises at least one of amplitude, frequency, carrier, bandwidth, phase, power or energy of the uplink signal.

33. The method according to claim 24 or 30, further comprising:
at a second moment, transmitting and/or receiving a third object;
wherein the second moment comprises at least one of the following:
a moment that is offset by a third duration from a reception time of the uplink signal; or
a moment that is offset by a fourth duration from a transmission time of a response signal to the uplink signal;
wherein the third object comprises at least one of the following:
synchronization signal/physical broadcast channel signal block SSB or system information block SIB1 transmitted by a target cell indicated by the trigger information;
at least one of a reference signal, a control channel, or a data channel transmitted by a target cell indicated by the trigger information;
at least one of a first reference signal or a first channel indicated by the trigger information;
at least one of a reference signal, a control channel, or a data channel corresponding to a specific function indicated by the trigger information;
at least one of a reference signal, a control channel, or a data channel corresponding to terminal requirement information indicated by the trigger information;
at least one of a reference signal, a control channel, or a data channel corresponding to a target cell state indicated by the trigger information;
at least one of a reference signal, a control channel or a data channel under default parameter configuration;
at least one of a reference signal, a control channel or a data channel under parameter configuration carried by a broadcast channel or broadcast message of an access cell;
a second reference signal and/or a second channel indicated by the response signal.

34. The method according to claim 28, wherein the trigger information comprises N bits of information, wherein N is an integer greater than or equal to 0;
wherein the N bits of information of the trigger information are used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

35. The method according to claim 28, wherein the first indication information comprises at least one of indication information of whether to wake up the target cell or indication information of the target cell to be woken up;
and/or, the first indication information comprises A1 bits of information and a value and/or sequence corresponding to the A1 bits of information is used to indicate whether to wake up the target cell and/or indicate the target cell to be woken up, where A1 is an integer greater than or equal to 0.

36. The method according to claim 28, wherein the second indication information comprises at least one of indication information of whether to transmit and/or receive the first object, or indication information of transmitting and/or receiving the first object;
and/or, the second indication information comprises A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

37. The method according to claim 28, wherein the third indication information comprises at least one of indication information indicating whether the target cell is switched between at least one cell state, or indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

38. The method according to claim 28, wherein the fourth indication information comprises at least one of an index of a cell in a frequency list, an index in a cell list, a cell identifier, a cell identify (ID), or a bit map of at least one cell.

39. The method according to claim 28, wherein the fifth indication information comprises at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

40. The method according to claim 28, wherein the sixth indication information comprises at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

41. The method according to claim 28, wherein the seventh indication information comprises at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

42. A signal transmission apparatus, comprising: a memory, a transceiver, and a processor; wherein the memory is used to store a computer program; the transceiver is used to send and receive data under the control of the processor; the processor is used to read the computer program in the memory and perform the following operations:
transmitting an uplink signal; wherein the uplink signal carries at least one of discovery information or trigger information;
wherein the discovery information is used to discover a terminal; and the trigger information is used for at least one of the following:
waking up a target cell;
triggering a target cell to transmit and/or receive a first object; wherein the first object includes at least one of a first reference signal or a first channel; or
triggering a target cell to switch to a target cell state.

43. The apparatus according to claim 42, wherein the uplink signal comprises a modulation signal, and the modulation signal includes at least one of an on-off keying (OOK) signal; an amplitude shift keying (ASK) signal; a frequency shift keying (FSK) signal; or a phase shift keying (PSK) signal.

44. The apparatus according to claim 43, wherein the modulation signal is a signal based on orthogonal frequency division multiplexing (OFDM).

45. The apparatus according to claim 42, wherein the uplink signal comprises an OFDM-based reference signal or channel.

46. The apparatus according to claim 42, wherein the discovery information comprises at least one of amplitude, frequency, carrier, bandwidth, phase, power or energy of a signal used for signal detection.

47. The apparatus according to claim 42, wherein the trigger information comprises at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

48. The method according to claim 47, wherein at least one piece of indication information in the trigger information is indicated in an implicit manner.

49. The apparatus according to claim 47, wherein the trigger information comprises N bits of information, wherein N is an integer greater than or equal to 0;
wherein the N bits of information of the trigger information are used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

50. The apparatus according to claim 47, wherein the first indication information comprises at least one of indication information of whether to wake up the target cell and indication information of the target cell to be woken up;
and/or, the first indication information comprises A1 bits of information and a value and/or sequence corresponding to the A1 bits of information is used to indicate whether to wake up the target cell and/or indicate the target cell to be woken up, where A1 is an integer greater than or equal to 0.

51. The apparatus according to claim 47, wherein the second indication information comprises at least one of indication information of whether to transmit and/or receive the first object, or indication information of transmitting and/or receiving the first object;
and/or, the second indication information comprises A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

52. The apparatus according to claim 47, wherein the third indication information comprises at least one of indication information indicating whether the target cell is switched between at least one cell state, and indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

53. The apparatus according to claim 47, wherein the fourth indication information comprises at least one of an index of a cell in a frequency list, an index in a cell list, a cell identifier, a cell identify (ID), and a bit map of at least one cell.

54. The apparatus according to claim 47, wherein the fifth indication information comprises at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

55. The apparatus according to claim 47, wherein the sixth indication information comprises at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

56. The apparatus according to claim 47, wherein the seventh indication information comprises at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

57. The apparatus according to claim 42, wherein the uplink signal comprises a first uplink signal, and the first uplink signal carries the discovery information and the trigger information;
or, the uplink signal comprises a second uplink signal and a third uplink signal, the second uplink signal carries the discovery information, and the third uplink signal carries the trigger information;
or, the uplink signal comprises a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal comprises a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

58. The apparatus according to claim 42, wherein the processor is further used to performs:
obtaining resource related information of the uplink signal; wherein the resource related information is used to generate the uplink signal and/or to determine a transmitting resource location of the uplink signal;
wherein the resource related information is obtained based on at least one of resource information stored in the terminal, resource information configured by neighboring cell high layer signaling, resource information configured by core network signaling, resource information transmitted by broadcast signaling, or resource information defined by the protocol.

59. The apparatus according to claim 58, wherein the resource related information of the uplink signal comprises at least one of the following:
generation related information of the uplink signal; or
resource location information of the uplink signal;
wherein the generation related information comprises at least one of a transmission frequency, the number of frequency domain units, patterns occupied by the frequency domain units, a time domain reference point, the number of time domain units occupied, the number of segments of the uplink signal, the number of points of inverse fast Fourier transform (IFFT), a sequence length of the uplink signal, a sequence length of at least one indication information in the uplink signal, or the number of at least one indication information in the uplink signal;
wherein the resource location information comprises at least one of time domain resource occasion information, frequency domain resource location information or spatial domain resource location information.

60. The apparatus according to claim 59, wherein the time domain resource occasion information comprises at least one of the following: time domain location information of the uplink signal; association information of time domain location of a specific signal/channel; duration of uplink signal transmission; valid time of uplink signal transmission; valid time gap of uplink signal transmission; uplink signal transmission pattern within a specific time period; number of uplink signal transmission; or period of uplink signal transmission.

61. The apparatus according to claim 59, wherein the frequency domain resource information of the uplink signal comprises at least one of the following: a subcarrier where the uplink signal is located; a bandwidth part BWP where the uplink signal is located, or a transmission pattern of the uplink signal in the frequency domain.

62. The apparatus according to claim 59, wherein the spatial resource location information of the uplink signal comprises beam-related information of the uplink signal.

63. The apparatus according to claim 42, wherein the processor is further used to performs:
obtaining a response signal for the uplink signal;
wherein the response signal carries at least one of the following:
acknowledgment information of the first signal;
feedback information of the first signal;
a second reference signal and/or second channel;
cell information of a cell that transmits the response signal; or,
specific cell information.

64. The apparatus according to claim 42 or 63, wherein the processor is further used to performs:
at a first moment, transmitting and/or receiving a second object of the target cell;
wherein the first moment comprises at least one of the following:
a moment that is offset by a first duration from a transmission time of the uplink signal; or
a moment that is offset by a second duration from a reception time of a response signal for the first signal;
wherein the target cell comprises at least one of the following:
at least one cell indicated by the trigger information;
at least one cell that transmits the response signal;
at least one cell indicated by the response signal;
a cell accessed by the terminal;
wherein the second object comprises at least one of the following:
synchronization signal/physical broadcast channel signal block (SSB) or system information block (SIB1) transmitted by the target cell;
at least one of a reference signal or a channel transmitted by the target cell;
at least one of a first reference signal or a first channel indicated by the trigger information;
at least one of a reference signal or a channel corresponding to a specific function indicated by the trigger information;
at least one of a reference signal or a channel corresponding to terminal requirement information indicated by the trigger information;
at least one of a reference signal and a channel corresponding to a target cell state indicated by the trigger information;
at least one of a reference signal or a channel under default parameter configuration;
at least one of a reference signal or a channel under parameter configuration carried by a broadcast channel or broadcast message of an access cell; or
a second reference signal and/or a second channel indicated by the response signal.

65. A signal transmission apparatus, comprising: a memory, a transceiver, and a processor;
wherein the memory is used to store a computer program; the transceiver is used to send and receive data under the control of the processor; the processor is used to read the computer program in the memory and perform the following operations:
receiving an uplink signal; wherein the uplink signal carries at least one of discovery information or trigger information;
wherein the discovery information is used to discover a terminal; and the trigger information is used for at least one of the following:
waking up a target cell;
triggering a target cell to transmit and/or receive a first object; wherein the first object includes at least one of a first reference signal or a first channel; or
triggering a target cell to switch to a target cell state.

66. The apparatus according to claim 65, wherein the uplink signal comprises a modulation signal, and the modulation signal includes at least one of an on-off keying (OOK) signal; an amplitude shift keying (ASK) signal; a frequency shift keying (FSK) signal; or a phase shift keying (PSK) signal.

67. The apparatus according to claim 66, wherein the modulation signal is a signal based on orthogonal frequency division multiplexing (OFDM).

68. The apparatus according to claim 65, wherein the uplink signal comprises an OFDM-based reference signal or channel.

69. The apparatus according to claim 65, wherein the trigger information comprises at least one of the following:
first indication information; wherein the first indication information is indication information for waking up the target cell;
second indication information; wherein the second indication information is indication information for triggering the target cell to receive and/or transmit the first object;
third indication information; wherein the third indication information is indication information for triggering the target cell to switch to the target cell state;
fourth indication information; wherein the fourth indication information is used to indicate identifier information of the target cell;
fifth indication information; wherein the fifth indication information is used to trigger the target cell to turn on and/or turn off a specific function;
sixth indication information; wherein the sixth indication information is used to indicate a specific identifier of the terminal; or
seventh indication information; wherein the seventh indication information is used to indicate demand information of the terminal.

70. The apparatus according to claim 65, wherein the uplink signal comprises a first uplink signal, and the first uplink signal carries the discovery information and the trigger information;
or, the uplink signal comprises a second uplink signal and a third uplink signal, the second uplink signal carries the discovery information, and the third uplink signal carries the trigger information;
or, the uplink signal comprises a fourth uplink signal and a fifth uplink signal; the fourth uplink signal is used to carry the discovery information and first trigger information in the trigger information; and the fifth uplink signal is used to carry second trigger information in the trigger information; at least part of the first trigger information is the same as the second trigger information, or the second trigger information is remaining trigger information in the trigger information except the first trigger information in the trigger information;
or, the trigger signal comprises a sixth uplink signal and a seventh uplink signal; the sixth uplink signal is used to carry first discovery information in the discovery information and third trigger information in the trigger information; the seventh uplink signal is used to carry second discovery information in the discovery information and fourth trigger information in the trigger information; the first discovery information is the same as or different from the second discovery information; the third trigger information is at least partially identical to the fourth trigger information, or, the fourth trigger information is trigger information in the trigger information except for the third trigger information in the trigger information.

71. The apparatus according to claim 65, wherein the processor is further used to perform:
transmitting a response signal for the uplink signal;
wherein the response signal carries at least one of the following:
acknowledgment information of the first signal;
feedback information of the first signal;
a second reference signal and/or second channel;
cell information of a cell that transmits the response signal; or,
specific cell information.

72. The apparatus according to claim 71, wherein the processor is further used to perform:
in case that signal information of the uplink signal meets a first condition, transmitting the response signal for the uplink signal;
wherein the signal information comprises at least one of amplitude, frequency, carrier, bandwidth, phase, power and energy of the uplink signal.

73. The apparatus according to claim 65, wherein the processor is further used to perform:
in case that signal information of the uplink signal meets a first condition, performing at least one of the following:
discovering the terminal; waking up the target cell; triggering the target cell to transmit or receive the first object; triggering the target cell to switch to the target cell state;
wherein the signal information comprises at least one of amplitude, frequency, carrier, bandwidth, phase, power and energy of the uplink signal.

74. The apparatus according to claim 65 or 71, wherein the processor is further used to perform:
at a second moment, transmitting and/or receiving a third object;
wherein the second moment comprises at least one of the following:
a moment that is offset by a third duration from a reception time of the uplink signal; or
a moment that is offset by a fourth duration from a transmission time of a response signal to the uplink signal;
wherein the third object comprises at least one of the following:
synchronization signal/physical broadcast channel signal block SSB or system information block SIB1 transmitted by a target cell indicated by the trigger information;
at least one of a reference signal, a control channel, and a data channel transmitted by a target cell indicated by the trigger information;
at least one of a first reference signal or a first channel indicated by the trigger information;
at least one of a reference signal, a control channel, or a data channel corresponding to a specific function indicated by the trigger information;
at least one of a reference signal, a control channel, or a data channel corresponding to terminal requirement information indicated by the trigger information;
at least one of a reference signal, a control channel, and a data channel corresponding to a target cell state indicated by the trigger information;
at least one of a reference signal, a control channel or a data channel under default parameter configuration;
at least one of a reference signal, a control channel or a data channel under parameter configuration carried by a broadcast channel or broadcast message of an access cell;
a second reference signal and/or a second channel indicated by the response signal.

75. The apparatus according to claim 69, wherein the trigger information comprises N bits of information, wherein N is an integer greater than or equal to 0;
wherein the N bits of information of the trigger information are used to indicate M indication information in the trigger information; an i-th indication information in the M indication information corresponds to Kᵢ bits in the N bits, and different indication information corresponds to different bits in the N bits, where M is an integer greater than or equal to 1, and M is less than or equal to N, Kᵢ is less than or equal to N, and Kᵢ is greater than or equal to 0; and/or, values or pattern corresponding to N1 bits in the N bits of information of the trigger information are used to indicate at least one indication information in the trigger information, where N1 is an integer greater than or equal to 1, and N1 is less than or equal to N.

76. The apparatus according to claim 69, wherein the first indication information comprises at least one of indication information of whether to wake up the target cell and indication information of the target cell to be woken up;
and/or, the first indication information comprises A1 bits of information and a value and/or sequence corresponding to the A1 bits of information is used to indicate whether to wake up the target cell and/or indicate the target cell to be woken up, where A1 is an integer greater than or equal to 0.

77. The apparatus according to claim 69, wherein the second indication information comprises at least one of indication information of whether to transmit and/or receive the first object, or indication information of transmitting and/or receiving the first object;
and/or, the second indication information comprises A2 bits, where A2 is an integer greater than or equal to 0; the second indication information indicates, through A3 bits among the A2 bits, at least one of whether to transmit and/or receive the first object, or transmitting and/or receiving the first objects; or indicates, through a sequence and/or value corresponding to the A2 bits, at least one of whether to transmit and/or receive the first object, or transmitting and/or receiving the first object; where A3 is less than or equal to A2, and A3 is an integer greater than or equal to 0;
and/or, when A3 is greater than 1, the A3 bits indicate, via bit mapping, at least one of whether to transmit and/or receive the first object, or transmitting and/or receiving the first object.

78. The apparatus according to claim 69, wherein the third indication information comprises at least one of indication information indicating whether the target cell is switched between at least one cell state, and indication information indicating for switching to or maintaining the target cell state;
and/or, the third indication information includes A4 bits, where A4 is an integer greater than or equal to 0; the third indication information indicates, through A5 bits among the A4 bits, at least one of whether to switch between at least one cell state, or switching or maintaining the target cell state; or, indicates, through a sequence and/or value corresponding to the A4 bits, at least one of whether to switch between at least one cell state, or switching or maintaining the target cell state, where A5 is less than or equal to A4, and A5 is an integer greater than or equal to 0;
and/or, when A5 is greater than 1, the A5 bits indicate, via bit mapping, at least one of whether to switch between at least one cell state, or switching or maintaining the target cell state.

79. The apparatus according to claim 69, wherein the fourth indication information comprises at least one of an index of a cell in a frequency list, an index in a cell list, a cell identifier, a cell identify (ID), and a bit map of at least one cell.

80. The apparatus according to claim 69, wherein the fifth indication information comprises at least one of indication information of whether to turn on and/or turn off a specific function, or indication information of turning on and/or turning off a specific function;
and/or, the fifth indication information includes A6 bits, where A6 is an integer greater than or equal to 0; the fifth indication information indicates, through A7 bits among the A6 bits, at least one of indication information of whether to turn on and/or turn off a specific function, or indication information of turning on and/or turning off a specific function; or indicates, through a sequence and/or value corresponding to the A6 bits, at least one of indication information of whether to turn on and/or turn off a specific function, where A7 is less than or equal to A6, and A7 is an integer greater than or equal to 0;
and/or, when A7 is greater than 1, the A7 bits indicate, via bit mapping, at least one of indication information of whether to turn on and/or turn off a specific function, or indication information of turning on and/or turning off a specific function.

81. The apparatus according to claim 69, wherein the sixth indication information comprises at least one of a specific type of the terminal or terminal identity information;
and/or, the sixth indication information includes A8 bits, where A8 is an integer greater than or equal to 0; and the sixth indication information indicates, through A9 bits among the A8 bits, at least one of a specific type of the terminal or terminal identity information; or indicates, through a sequence and/or value corresponding to the A8 bits, at least one of a specific type of the terminal or terminal identity information, where A9 is less than or equal to A8, and A9 is an integer greater than or equal to 0;
and/or, when A9 is greater than 1, the A9 bits indicate, via bit mapping, at least one of a specific type of the terminal or terminal identity information.

82. The apparatus according to claim 69, wherein the seventh indication information comprises at least one of indication information of a terminal service requirement or indication information of a terminal service type;
and/or, the seventh indication information includes A10 bits, where A10 is an integer greater than or equal to 0; the seventh indication information indicates, through A11 bits of the A10 bits, at least one of indication information of a terminal service requirement or indication information of a terminal service type; or indicates, through a sequence or value corresponding to the A10 bits, at least one of indication information of a terminal service requirement or indication information of a terminal service type, where A11 is less than or equal to A10, and A11 is an integer greater than or equal to 0;
and/or, when A11 is greater than 1, the A11 bits are used for indication via bit mapping, where A10 is an integer greater than or equal to 0.

83. A processor-readable storage medium, comprising: a computer program stored thereon; wherein the computer program is used to cause a processor to perform steps of the signal transmission method according to any one of claims 1 to 23, or perform steps of the signal transmission method according to any one of claims 24 to 41.
